# EUROPEAN PATENT APPLICATION

(11) **EP 2 800 051 A1**
(43) Date of publication of application: **05.11.2014**
(21) Application number: 11878602.9
(22) Date of filing: 28.12.2011
(51) Int. Cl.: G06Q 50/14, G06Q 30/02, G06Q 50/10

(54) **INFORMATION PROCESSING DEVICE, INFORMATION PROCESSING METHOD, INFORMATION PROCESSING PROGRAM AND RECORDING MEDIUM WITH INFORMATION PROCESSING PROGRAM RECORDED THEREON**

(71) Applicant: Rakuten, Inc., Tokyo 140-0002 (JP)
(72) Inventor: YOSHIOKA Takumi, Tokyo 140-0002 (JP)
(74) Representative: EIP
(86) International application number: PCT/JP2011/080437
(87) International publication number: WO 2013/099003

(57) **Abstract**

Disclosed are an information processing device etc. whereby, when the genre of a plurality of locations to be visited and the period for visiting each location are provided, combinations of locations to be visited that could be respectively selected from each specified genre in the specified period can be specified. The genres of locations to be visited and the period over which visits may be made are acquired. Based on the acquired periods and positional information of the various locations to be visited belonging to each genre stored by storage means, combinations of locations to be visited that could be respectively selected from each specified genre in the specified period can be specified.

## Description

### Technical Field

The present invention relates to a technical field of an information processing apparatus and the like that present combinations of visit points which are respectively selected from a plurality of genres of visit points and which can be visited in a given period of time.

### Background Art

Conventionally, a web site is known where a leisure facility such as a golf course or a transportation means such as a rent-a-car and a taxi can be reserved at the same time when an airline ticket and an accommodation facility are reserved.

Further, a technique is disclosed which presents some candidates of visit points to a user by presenting a plurality of search methods such as a keyword search, an image search, or a recommended route search to the user and reusing a search result found by any of the search methods as a search key of another search method, and causes the user to decide a visit point from the candidates of visit points to support the user to create an itinerary (for example, Patent Literature 1).

### Citation List

### Patent Document

Patent Document 1: Japanese Patent Application Laid-Open No. 2002-203012

### Summary of Invention

### Technical Problem to be solved by the Invention

However, for example, the conventional technique described above is not suitable to decide visit points (for example, Mt. Tsukuba, Tsukuba soba restaurant, and Tsukubasan hot spring) in a case in which a combination of a plurality of genres of visit points (for example, mountain, soba restaurant, and hot spring) is decided according to things that a user wants to do but a specific visit point is not decided for each genre of visit point.

The present invention is made in view of the above situation, and an object of the present invention is to provide an information processing apparatus and the like which, in a case in which a plurality of genres of visit points and a period of visiting are given, can specify a combination of visit points where visit points of each of the genres can be visited in the period of visiting.

### Solution to The Problem

In order to achieve the above described problems, an invention described in claim 1 is an information processing apparatus characterized in that the information processing apparatus comprises: an acquiring means that acquires information indicating a plurality of genres of visit points and a period of visiting; and a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

According to this invention, it is possible to specify a combination of visit points which are respectively selected from a plurality of genres of visit points and which can be visited within the period of visiting.

In order to achieve the above described problems, an invention described in claim 2 is the information processing apparatus according to claim 1 characterized in that, wherein the specifying means specifies the combination by deciding an area from which visit points to be included in the combination are selected based on at least either one of the number of the genres or the period of visiting which are acquired by the acquiring means and selecting visit points to be included in the combination from the decided area.

According to this invention, it is possible to specify the combination by selecting visit points based on at least either one of the number of genres and the period of visiting.

In order to achieve the above described problems, an invention described in claim 3 is the information processing apparatus according to claim 2 characterized in that, wherein the specifying means decides, based on the number of genres acquired by the acquiring means, the area so that the greater the number of the genres, the smaller the area, and the smaller the number of the genres, the larger the area.

According to this invention, even when the number of the acquired genres is large, the combination where traveling between visit points far away from each other is required is not specified, so that it is possible to output a practical search result without having to strictly calculate the traveling time between the visit points.

In order to achieve the above described problems, an invention described in claim 4 is the information processing apparatus according to claim 2 characterized in that, wherein the specifying means decides, based on the period of visiting acquired by the acquiring means, the area so that the shorter the period of visiting, the smaller the area, and the longer the period of visiting, the larger the area.

According to this invention, even though the acquired period of visiting is short, the combination where traveling between visit points far away from each other is required is not specified, so that it is possible to output a practical search result without having to strictly calculate the traveling time between the visit points.

In order to achieve the above described problems, an invention described in claim 5 is the information processing apparatus according to any one of claims 1 to 4 characterized in that, wherein the specifying means specifies the combination of visit points by prioritizing genres where the number of visit points belonging to each of the genres is small.

According to this invention, the combination is specified by prioritizing genres where the number of visit points belonging to each of the genres is small, so that it is possible to reduce the amount of calculation as compared with a case in which the combination is specified by prioritizing genres where the number of visit points belonging to each of the genres is small.

In order to achieve the above described problems, an invention described in claim 6 is the information processing apparatus according to claim any one of claims 1 to 5 characterized in that, wherein the acquiring means further acquires information indicating a visit time slot for each visit point, and the specifying means specifies a traveling time required to travel between each visit point and specifies the combination where each visit point can be respectively visited in each visit time slot based on the specified traveling time and the acquired information indicating a visit time slot for each visit point.

According to this invention, it is possible to specify the combination where each visit point can be respectively visited in the acquired visit time slot for each visit point.

In order to achieve the above described problems, an invention described in claim 7 is the information processing apparatus according to claim 6 characterized in that, wherein the specifying means specifies the combination by shifting at least any one of the acquired visit time slots forward or backward by a predetermine time.

According to this invention, it is possible to specify the combination where at least any one of the acquired visit time slots is shifted forward or backward by a predetermine time. For example, in a case such as that the number of the combinations specified by using the acquired visit time slots is small, the probability to increase the specified combinations increases.

In order to achieve the above described problems, an invention described in claim 8 is the information processing apparatus according to claim 7 characterized in that the information processing apparatus further comprises: a generating means that generates information indicating how much the number of the specified combinations is changed by shifting the visit time slot forward or backward by a predetermined time on the basis of the combinations specified by the specifying means by shifting the visit time slot forward or backward by the predetermined time and the combinations specified by the specifying means without shifting the visit time slot forward or backward by the predetermined time.

According to this invention, it is possible to grasp how much the number of specified combinations changes between in a case in which the visit time slot is shifted forward or backward by a predetermined time and in a case in which the visit time slot is not shifted.

In order to achieve the above described problems, an invention described in claim 9 is the information processing apparatus according to any one of claims 1 to 8 characterized in that, wherein the acquiring means further acquires information indicating a visit time slot for each visit point, and in a case in which a visit time slot for any one of visit points indicated by the acquired information is included in a visit time slot for another visit point, the specifying means specifies the two visit points, where one visit point corresponding to one visit time slot including the other visit time slot includes the other visit point corresponding to the other visit time slot included in the one visit time slot, as at least a part of the combination of visit points.

According to this invention, in a case in which visit time slots for each visit point where a visit time slot for any of visit points is included in a visit time slot for another visit point are acquired, it is possible to specify two visit points, where the visit point corresponding to one visit time slot that is included in the other visit time slot can be visited while visiting the visit point corresponding to the other visit time slot that includes the one visit time slot, as at least a part of the combination of visit points.

In order to achieve the above described problems, an invention described in claim 10 is the information processing apparatus according to any one of claims 1 to 9 characterized in that, wherein the acquiring means further acquires information indicating an allowable traveling time allowed to travel between each visit point, and the specifying means specifies a traveling time required to travel between each visit point and specifies the combination where it is possible to travel between each visit point within each allowable traveling time indicated by the acquired information.

According to this invention, it is possible to specify the combination where it is possible to travel between each visit point within the allowable traveling time allowed to travel between each visit point.

In order to achieve the above described problems, an invention described in claim 11 is the information processing apparatus according to any one of claims 1 to 10 characterized in that, wherein the acquiring means further acquires information indicating a scheduled staying time for each visit point, and the specifying means specifies the combination based on information indicating a standard staying time for each visit point stored in the storage means and the acquired information indicating the scheduled staying time.

According to this invention, it is possible to specify the combination considering the scheduled staying time and the standard staying time at each visit point.

In order to achieve the above described problems, an invention described in claim 12 is the information processing apparatus according to claim 11 characterized in that, wherein the specifying means specifies the combination including visit points where the standard staying time is longer than or equal to the scheduled staying time.

According to this invention, it is possible to specify the combination including visit points where the standard staying time is longer than or equal to the scheduled staying time.

In order to achieve the above described problems, an invention described in claim 13 is the information processing apparatus according to claim 11 characterized in that, wherein the specifying means specifies the combination including visit points where the standard staying time is included in a predetermined time range from the scheduled staying time.

According to this invention, it is possible to specify the combination including visit points where the standard staying time is included in a predetermined time range from the scheduled staying time.

In order to achieve the above described problems, an invention described in claim 14 is the information processing apparatus according to any one of claims 11 to 13 characterized in that, wherein the specifying means specifies the combination by shortening or extending the scheduled staying time indicated by the acquired information.

According to this invention, it is possible to specify the combination where the acquired scheduled staying time is shortened or extended. For example, in a case such as that the number of the combinations specified by using each of the acquired scheduled staying time is small, the probability to increase the specified combinations increases.

In order to achieve the above described problems, an invention described in claim 15 is the information processing apparatus according to claim 14 characterized in that, the information processing apparatus further comprises: a generating means that generates information indicating how much the number of the combinations is changed by shortening or extending the scheduled staying time on the basis of the combinations specified by the specifying means by shortening or extending the scheduled staying time and the combinations specified by the specifying means without shortening or extending the scheduled staying time.

According to this invention, it is possible to grasp how much the number of specified combinations changes between in a case in which the acquired scheduled staying time is shortened or extended and in a case in which the acquired scheduled staying time is neither shortened nor extended.

In order to achieve the above described problems, an invention described in claim 16 is the information processing apparatus according to any one of claims 1 to 15 characterized in that, wherein the acquiring means further acquires information indicating a visiting order of each visit point, and the specifying means specifies a traveling time required to travel between each visit point and specifies the combination where each visit point can be visited in the visiting order based on the specified traveling time and the acquired information indicating the visiting order.

According to this invention, it is possible to specify the combination where each visit point can be visited in the acquired visiting order by considering the traveling time between each visit point.

In order to achieve the above described problems, an invention described in claim 17 is the information processing apparatus according to claim 16 characterized in that, wherein the specifying means specifies the combination where each visit point can be visited in a visiting order obtained by changing at least a part of the visiting order.

According to this invention, it is possible to specify the combination where each visit point can be visited in a visiting order obtained by changing at least a part of the visiting order by considering the traveling time between each visit point.

In order to achieve the above described problems, an invention described in claim 18 is the information processing apparatus according to claim 17 characterized in that, the information processing apparatus further comprises: a generating means that generates information indicating how much the number of the combinations is changed by changing the visiting order of visit points on the basis of the combinations specified by changing at least a part of the visiting order and the combinations specified without changing the visiting order.

According to this invention, it is possible to grasp how much the number of specified combinations changes between in a case in which the visiting order is changed and in a case in which the visiting order is not changed.

In order to achieve the above described problems, an invention described in claim 19 is the information processing apparatus according to any one of claims 1 to 18 characterized in that, wherein the acquiring means further acquires information indicating a visit date and time of each visit point, and the specifying means specifies the combination including visit points that can be reserved on the basis of information which is stored in the storage means and indicates reservation availability of each visit point and the acquired information indicating the visit date and time.

According to this invention, it is possible to specify the combination including visit points that can be reserved.

In order to achieve the above described problems, an invention described in claim 20 is an information processing method performed by a computer, the method characterized in that the method comprises: an acquisition step of acquiring information indicating a plurality of genres of visit points and a period of visiting; and a specifying step of specifying, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

In order to achieve the above described problems, an invention described in claim 21 is a recording medium in which an information processing program is computer-readably recorded, the information processing program characterized in that the information processing program causes a computer to function as: an acquiring means that acquires information indicating a plurality of genres of visit points and a period of visiting; and a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

In order to achieve the above described problems, an invention described in claim 22 is an information processing program characterized in that the information processing program causes a computer to function as: an acquiring means that acquires information indicating a plurality of genres of visit points and a period of visiting; and a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

### Effect of Invention

According to the present invention, it is possible to specify a combination of visit points which are respectively selected from a plurality of genres of visit points and which can be visited within the period of visiting. For example, in a case in which a combination of a plurality of genres of visit points is decided according to things that a user wants to do but a specific visit point is not decided for each genre of visit points, the user can acquire a combination of visit points, where each visit point can be visited in a period of visiting and which is specified by an information processing apparatus and the like, by causing the information processing apparatus and the like to acquire the combination of a plurality of genres of visit points and the period of visiting.

### Brief Description of Drawings

Fig. 1 is a figure showing one example of a schematic configuration of an itinerary creation support system S.
Fig. 2 is a block figure showing a configuration example of an information processing server 1.
Fig. 3(A) is a figure showing one example of content registered in a visit point DB 121. Fig. 3(B) is a figure showing one example of content in an area level decision table 122.
Fig. 4 is a block figure showing a configuration example of a user terminal 3.
Fig. 5 is a figure showing one example of a user designation screen 200.
Fig. 6 is a flowchart showing one example of a main process performed by a control unit 11 of the information processing server 1.
Fig. 7 is a flowchart showing one example of a visit point combination specification process performed by the control unit 11 of the information processing server 1.
Fig. 8 is one example of a part of the content registered in the visit point DB 121.
Fig. 9(A) is one example of combinations specified in course of the visit point combination specification process. Fig. 9(B) is one example of visit points selected in course of the visit point combination specification process. Figs. 9(C) and 9(D) are one example of combinations specified in course of the visit point combination specification process.
Fig. 10 is a figure showing one example of a specification result display screen 300.
Fig. 11(A) is a figure showing one example of content in an area level decision table 122A in a modified example. Fig. 11(B) is a figure showing one example of content in an area level decision table 122B in the modified example.
Fig. 12(A) is one example of combinations specified in course of a visit point combination specification process in a modified example. Fig. 12(B) is one example of visit points selected in course of the visit point combination specification process in the modified example. Figs. 12(C) and 12(D) are one example of combinations specified in course of the visit point combination specification process in the modified example.
Fig. 13 is a figure showing one example of a user designation screen 200 in a modified example.
Fig. 14 is a figure showing one example of a user designation screen 400 in a modified example.
Fig. 15 is a figure showing one example of the specification result display screen 300 in a modified example.
Fig. 16 is a figure showing one example of the specification result display screen 300 in a modified example.
Fig. 17 is a figure showing one example of the user designation screen 200 in a modified example.
Fig. 18 is a figure showing one example of a specification result display screen 300 in a modified example.
Fig. 19 is a figure showing one example of a specification result display screen 500 in a modified example.
Fig. 20 is a figure showing one example of a specification result display screen 500 in a modified example.
Fig. 21 is a figure showing one example of a specification result display screen 500 in a modified example.
Fig. 22 is a figure showing one example of the specification result display screen 500 in a modified example.
Fig. 23 is a figure showing one example of an internal visit point specification table 123 in a modified example.

### Modes for carrying out the Invention

Hereinafter, an embodiment of the present invention will be described with reference to the drawings. Then, the embodiment described below is an embodiment where the present invention is applied to an information processing server 1 in an itinerary creation support system S.

### [1. Schematic Configuration and Function of Itinerary Creation Support System S]

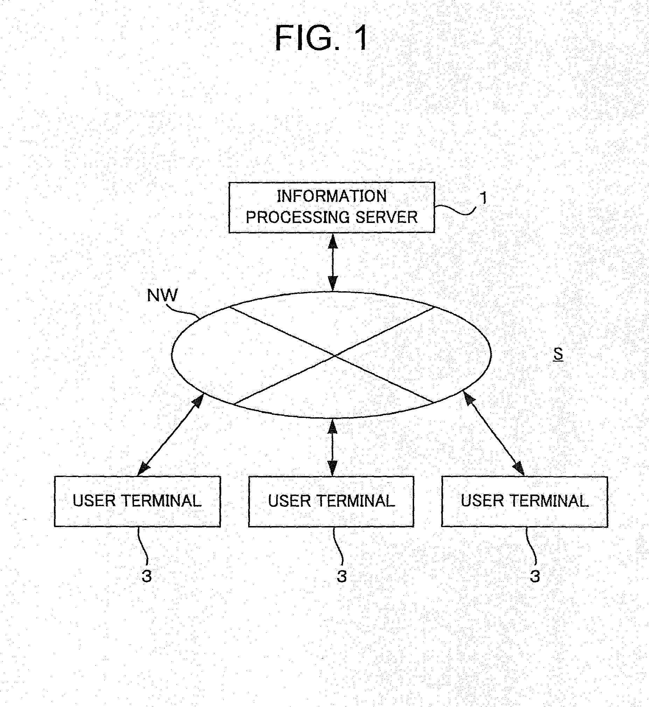

First, schematic configuration and function of an itinerary creation support system S according to the embodiment of the present invention will be described with reference to Fig. 1.

As shown in Fig. 1, the itinerary creation support system S consists of including user terminals 3 and an information processing server 1 (one example of "information processing device"). The user terminals 3 and the information processing server 1 are connected through a network NW. The network NW is constructed with, for example, the Internet, a dedicated communication line (for example, a CATV (Community Antenna Television) line), a mobile communication network (including a base station and the like), and a gateway.

The information processing server 1 is a server apparatus that performs various processes related to a web site (referred to as an "itinerary creation support site") for supporting a user to create an itinerary. According to a request from the user terminal 3, the information processing server 1 transmits, for example, a web page for a user to designate genres of visit points and a time frame of a visit and a web page that posts combinations of visit points specified based on the designated genres and time frame to the user terminal 3 and causes the user terminal 3 to display the web pages. In other words, the information processing server 1 functions as a web server, a visit point combination specification server, a database management server, and the like. The information processing server 1 can be applied not only to the itinerary creation support site, but also to a travel reservation site, an accommodation facility reservation site, a transportation facility seat reservation site, and the like.

Web browser software is installed into the user terminal 3. The user terminal 3 transmits, for example, an HTTP (Hyper Text Transfer Protocol) request to the information processing server 1, acquires a web page or the like as a response to the request, and displays on a display unit. Thereby, the user of the user terminal 3 can browse information provided from the itinerary creation support site.

In the itinerary creation support system S, when a user designates a time frame (one example of "period of time") and a plurality of genres of visit points that the user wants to visit through the user terminal 3, the designated contents are transmitted to the information processing server 1, combinations of visit points (hereinafter may referred to as simply "combinations") respectively selected from each of the genres designated by the user are specified in the information processing server 1, and a specification result is displayed on the user terminal 3. For example, when the user designates "mountain", "soba restaurant" and "hot spring" as genres of visit points, combinations of "mountain", "soba restaurant" and "hot spring" that can be visited in the designated time frame are specified and a list of the combinations is outputted as a specification result. In other words, according to the itinerary creation support system S, the user can acquire combinations of visit points where the user can do things that the user wants to do by designating genres of visit points according to the things that the user wants to do (in the above example, "mountain climbing", "eating soba" and "bathing in hot spring") in a time frame to be designated.

### [2. Configuration of Information Processing Server 1]

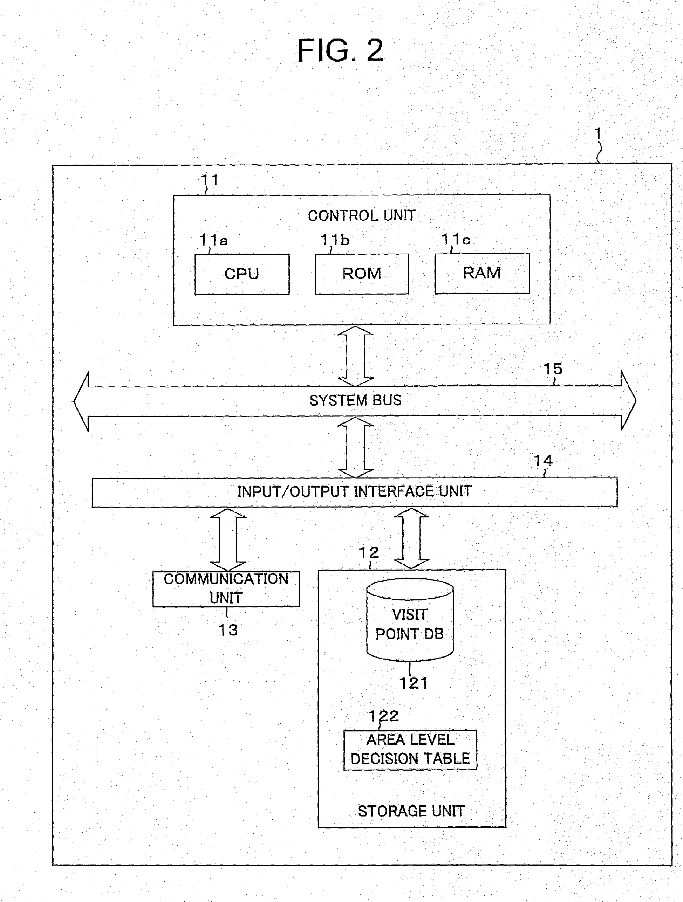

As shown in Fig. 2, the information processing server 1 includes a control unit 11, a storage unit 12, a communication unit 13 and an input/output interface unit 14. Further, the control unit 11 and the input/output interface unit 14 are connected through a system bus 15.

The communication unit 13 connects to the network NW and is constructed to control communication to transmit and receive data to and from another apparatus such as the information processing server 1.

The storage unit 12 includes, for example, a hard disk drive, and stores various programs such as an operating system and a server program (one example of "information processing program"). For example, the server program may be delivered from a predetermined server or the like through the network NW, or may be recorded in a recording medium such as a CD (Compact Disc) and a DVD (Digital Versatile Disc) and provided.

Further, the storage unit 12 stores various HTML (HyperText Markup Language) documents and components (image data, sound data, moving image data, and the like) to create web pages transmitted to the user terminal 3. The web pages transmitted to the user terminal 3 include the user designation screen 200 and the specification result display screen 300, which will be described later.

Further, in the storage unit 12, various DBs such as a visit point (DB (database)) 121 are constructed.

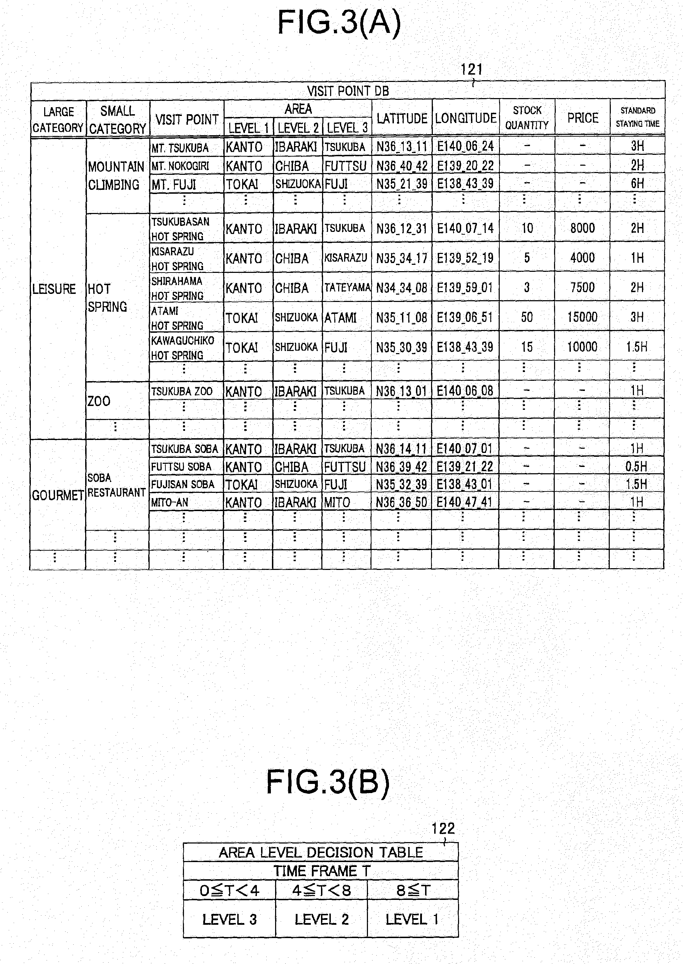

As shown in Fig. 3(A), in the visit point DB 121, for each visit point, a large genre and a small genre (one example of "genre") to which the visit point belongs, an area (one example of "position information") to which the visit point belongs, the latitude and longitude of the visit point, and a standard staying time at the visit point are registered (stored). Further, in a case in which the visit point is a facility that accepts a reservation (for example, hot spring, golf course or the like), a price and availability information that indicates the number of available reservations are registered (the price and the availability information are registered on every certain day within a predetermined period of time (for example, within two months from the current date)). Further, although not shown in the drawings, a base station area to which the visit point belongs in a mobile communication network is registered. In the present embodiment, as a large genre, a leisure genre, a gourmet genre, a shopping genre, and a culture genre are provided. These large genres are further classified into small genres. A user designates a large genre and then designates a small genre, so that the user can easily designate a genre of a visit point (in the present embodiment, a small genre) that the user wants to visit. Hereinafter, specific examples of small genres will be described for each large genre.

The leisure genre is sub-classified into small genres, for example, a "mountain" genre, a "sea (sea bathing)" genre, a "sea (fishing)" genre, a "river (fishing)" genre, a "golf course" genre, a "ski resort" genre, a "skating rink" genre, a "tennis court" genre, a "batting center" genre, a "pool hall" genre, a "swimming pool" genre, a "bowling alley" genre, a "fishing pond" genre, a "hot spring" genre, an "amusement park" genre, a "barbecue (BBQ) area" genre, a "movie theater" genre, a "karaoke" genre, a "sauna" genre, a "botanical garden" genre, an "aquarium" genre, a "zoo" genre, an "astronomical observatory" genre, a "horse race (race track)" genre, a "speed boat race (speed boat racing course)" genre and a "bicycle race (bicycle race track)" genre.

The gourmet genre is sub-classified into small genres, for example, an "Italian restaurant" genre, a "French restaurant" genre, a "Chinese restaurant" genre, a "Korean restaurant" genre, a "Japanese restaurant" genre, a "Western restaurant" genre, a "ramen restaurant" genre, a "grilled meat restaurant" genre, a "yakitori restaurant" genre, a "pork cutlet restaurant" genre, a "udon restaurant" genre, a "soba restaurant" genre, an "eel restaurant" genre, an "okonomiyaki restaurant" genre, a "sushi restaurant" genre, a "Kappo/Kaiseki" genre, a "curry restaurant" genre, a "coffee shop" genre, a "steakhouse" genre, and a "fast-food restaurant" genre. There are restaurants (visit points) that are redundantly registered in a plurality of genres such as the "Italian restaurant" genre and the "Western restaurant" genre or the "Kappo/Kaiseki" genre and the "Japanese restaurant" genre.

The shopping genre is sub-classified into small genres, for example, a "clothing store" genre, a "candy/cake store" genre, a "souvenir shop" genre, a "toy store" genre, a "home furnishing store" genre, a "home appliance store" genre, a "shoes/bags store" genre, a "convenience store" genre, a "liquor store" genre, a "general store" genre, a "CD/video store" genre, a "bicycle/motorcycle shop" genre, a "shopping center" genre, a "bookstore" genre, a "sporting goods store" genre, a "department store" genre, a "flower/gardening shop" genre, a "bakery" genre, a "pet shop" genre, a "home center" genre, a "car accessory shop" genre, and a "pharmacy/drugstore" genre.

The culture genre is sub-classified into small genres, for example, a "castle or ruin of castle" genre, a "temple/shrine" genre, a "church" genre, an "exhibition hall" genre, a "library" genre, a "museum" genre, an "art gallery" genre, an "archive museum" genre, and a "scenic and historic places" genre.

Further, in the visit point DB 121, an area to which each visit point belongs is defined for each level of three area levels (although, in the present embodiment, the number of levels is three, the number of levels can be arbitrarily set). As the three levels, in order from the top area level, a level 1, a level 2, and a level 3 are provided. The higher the area level, the larger the area is defined, and the lower the area level, the smaller the area is defined. It is defined so that an area of level 3 belongs to an area of level 2 and an area of level 2 belongs to an area of level 1. For example, it is defined so that the Tsukuba area and the Mito area, which are level 3, belong to the Ibaraki area of level 2 and the Ibaraki area belongs to the Kanto area of level 1. As described later, when the control unit 11 specifies a combination of visit points, the control unit 11 decides an area level used to specify the combination by using an area level decision table 122 described later and specifies a combination of visit points belonging to the same area in the decided area level. As a result, in a case in which the area level used to specify the combination is decided to be level 3, a combination including visit points selected from an area smaller than areas, which are used in a case in which the area level is decided to be level 1 or level 2, is specified.

Further, the database may be provided in a storage means of a predetermined server that can be accessed from the information processing server 1.

Further, the storage unit 12 stores the area level decision table 122. As shown in Fig. 3(B), in the area level decision table 122, the area levels are defined according to the size of the time frame T designated by a user. Specifically, in the area level decision table 122, the area levels are defined so that the smaller the time frame T (a difference between the start time and the end time) designated by the user, the lower the area level. This is because in a case in which visiting visit points in a small time frame (that is, a short period of time), it is difficult to visit visit points spread in a large area. Therefore, in a case in which the time frame T designated by the user is small, a combination including visit points respectively selected from small areas is specified. Further, the area level decision table 122 may be provided for each user, and threshold values of the time frame T for the area levels to be defined may be set for each user. In this case, the threshold values may be decided based on history information of each user.

The input/output interface unit 14 performs interface processing between the communication unit 13 and the storage unit 12, and the control unit 11.

The control unit 11 includes a CPU (Central Processing Unit) 11a, a ROM (Read Only Memory) 11b, a RAM (Random Access Memory) 11c, and the like. The control unit 11, which functions as a computer, performs such as a main process and a visit point combination specification process, which will be described later, by executing the server program stored in the storage unit 12. Further, the control unit 11 functions as an acquiring means, a specifying means, and the like.

### [3. Configuration of User Terminal 3]

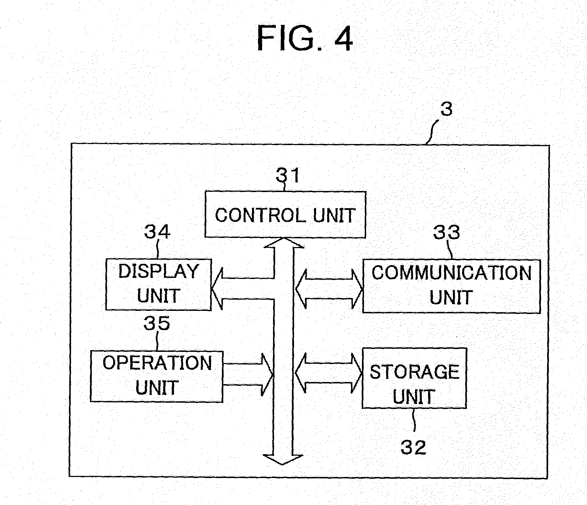

As shown in Fig. 4, the user terminal 3 includes a control unit 31 including a CPU, a RAM, a ROM, and the like, a storage unit 32, a communication unit 33 that controls communication with the information processing server 1 through a network, a display unit 34, an operation unit 35, and the like. The storage unit 32 stores various programs such as an operating system and web browser software. The display unit 34 includes, for example, a liquid crystal display and the like. The operation unit 35 includes a keyboard, a mouse, and the like. Further, as the user terminal 3, for example, a personal computer (PC), a PDA (Personal Digital Assistant), a mobile information terminal such as a smartphone, a mobile phone, or a portable game machine is used.

### [4. User designation Screen 200]

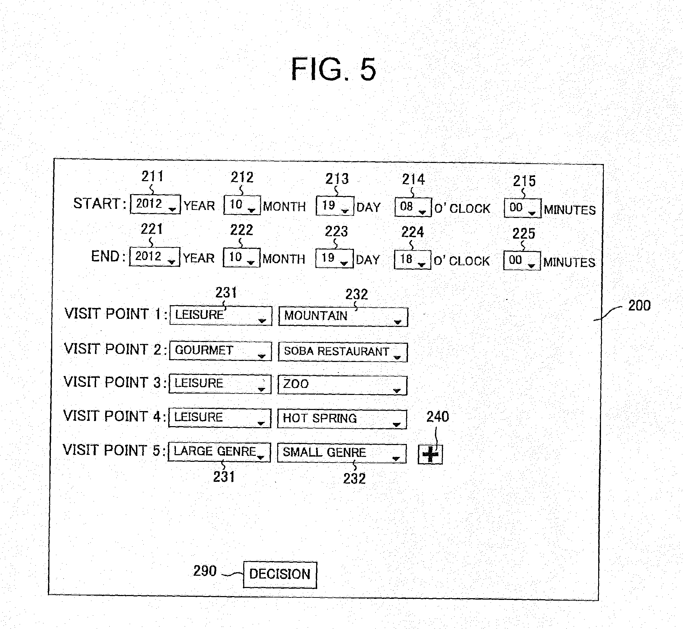

Next, a method for designating genres of visit points that a user wants to visit and the time frame T to visit all the visit points on the user terminal 3 will be described with reference to Fig. 5. When the user tries to designate the genres and the time frame T, the user accesses the itinerary creation support site by using the user terminal 3, and causes the display unit 34 to display the user designation screen 200 of the itinerary creation support site.

As shown in Fig. 5, the user designation screen 200 is provided with a start year designation drop-down list 211, a start month designation drop-down list 212, a start day designation drop-down list 213, a start hour designation drop-down list 214, and a start minute designation drop-down list 215 for designating the start date and time of the time frame T and an end year designation drop-down list 221, an end month designation drop-down list 222, an end day designation drop-down list 223, an end hour designation drop-down list 224, and an end minute designation drop-down list 225 for designating the end date and time of the time frame T. The user can designate the start date and time of the time frame T and the end date and time of the time frame T by selecting an appropriate value from each drop-down list. Further, although in the present embodiment, the drop-down lists are employed as an input method of the start date and time and the end date and time, another input method (for example, direct input or the like) may be employed. The same goes for the drop-down lists described below.

In the user designation screen 200, a large genre designation drop-down list 231 and a small genre designation drop-down list 232 for designating genres of a visit point are provided for each visit point. The user can designate the small genre of a visit point that the user wants to visit by performing operations to designate the large genre and the small genre in order of the large genre designation drop-down list 231 and the small genre designation drop-down list 232. Further, in the user designation screen 200, an add button 240 is provided, and when the add button 240 is clicked, a new line is displayed and genres of a visit point can be further designated.

Further, in the user designation screen 200, a decision button 290 is provided. When the user completes the designation of the time frame T and the small genre and then clicks the decision button 290, information (referred to as "user-designated information") indicating the designated time frame T (the start date and time and the end date and time) and the type of the small genre is transmitted to the information processing server 1.

### [5. Operation of Information Processing Server 1]

### [5.1. Main Process]

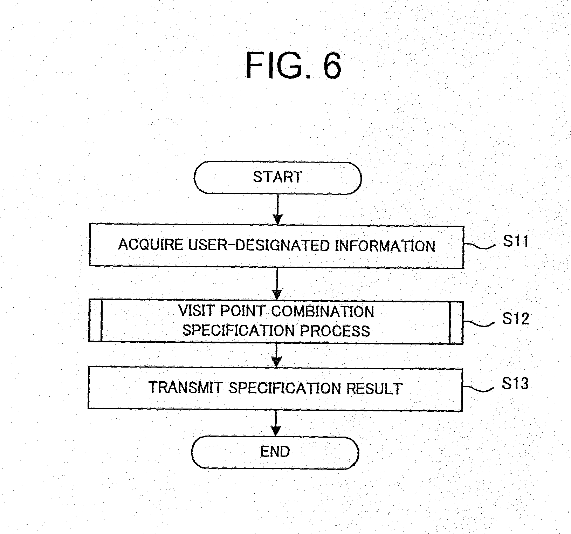

Next, a process performed by the control unit 11 of the information processing server 1 will be described with reference to a flowchart shown in Fig. 6.

First, the control unit 11 of the information processing server 1 acquires the user-designated information from the user terminal 3 (step S11). In other words, the control unit 11 acquires content indicated by the user-designated information (the designated time frame T (the start date and time and the end date and time) and the type of the small genre). Subsequently, the system control unit 11 performs a specification process for specifying combinations of visit points ("visit point combination specification process") (step S12). After completing the specification process, the control unit 11 transmits a list of the combinations of visit points as a specification result to the user terminal 3 that has transmitted the user-designated information (step S13) and then ends the process of the flowchart. Further, specifically, in the process of step S13, the control unit 11 transmits a web page to cause the display unit 24 of the user terminal 3 to display the specification result display screen 300 indicating the specification result. The specification result display screen 300 will be described later.

### [5.2. Visit point Combination Specification Process]

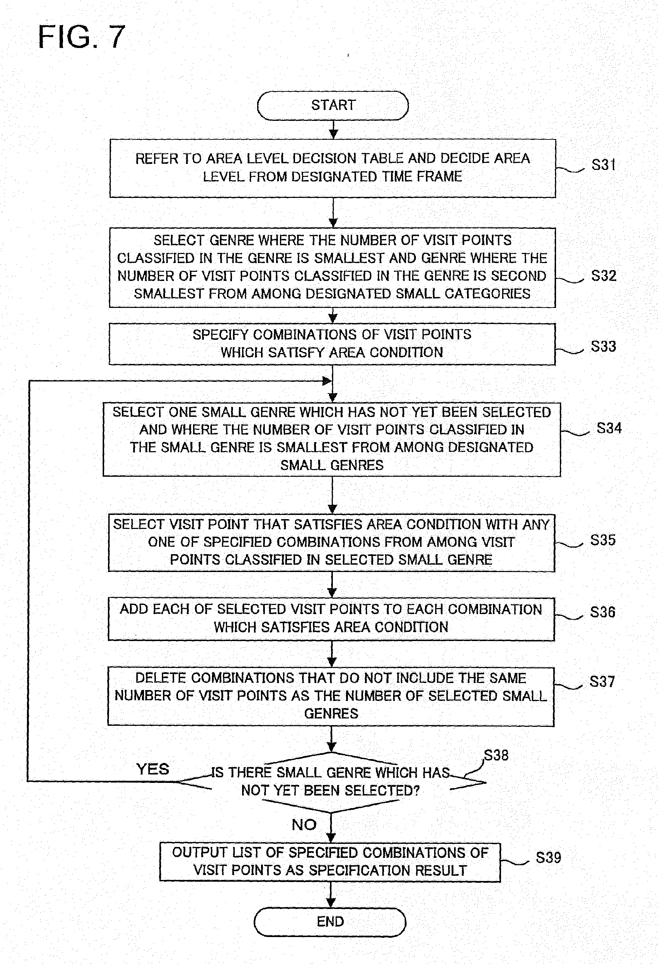

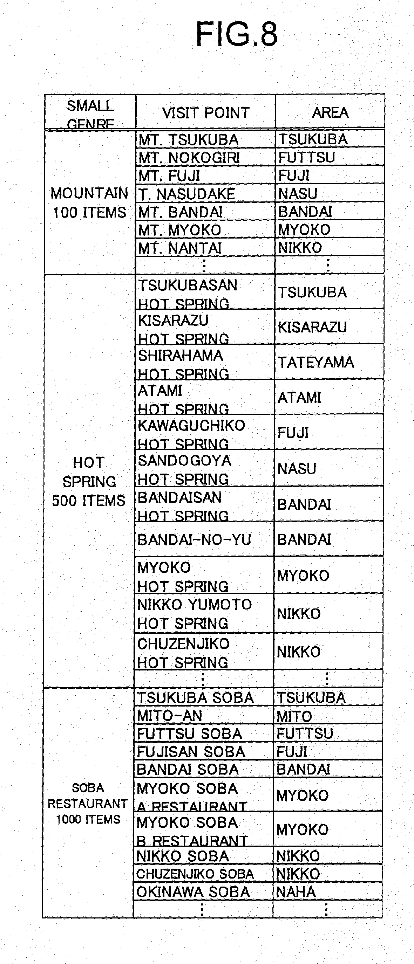

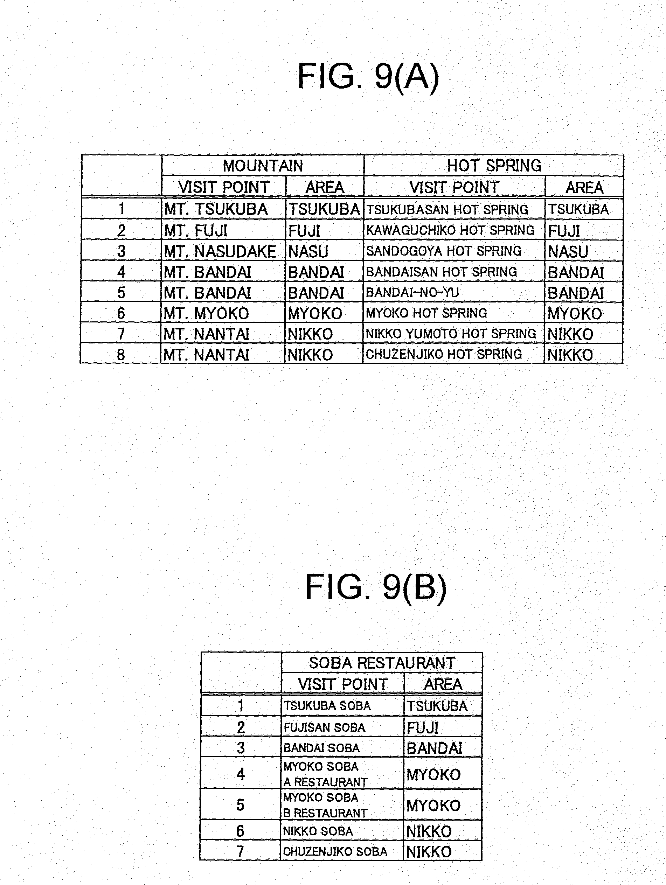

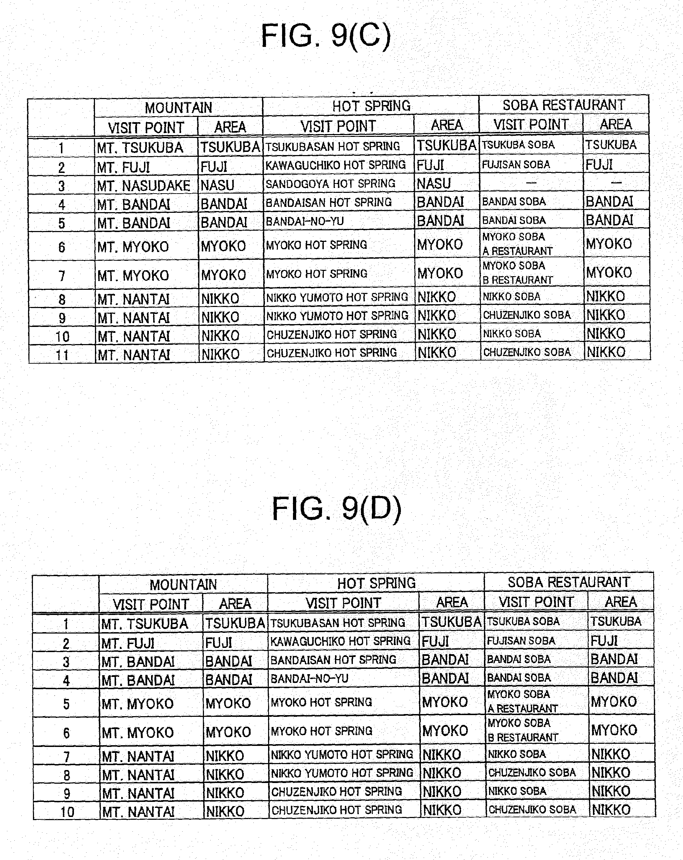

Next, the visit point combination specification process performed in step S12 in Fig. 6 will be described with reference to Figs. 7 to 9. Further, a specific example of a case in which the "mountain" genre, the "soba restaurant" genre, and the "hot spring" genre are designated as the small genres by the user and the visit points shown in Fig. 8 are registered for each of these genres will be appropriately described with reference to Figs. 8 and 9.

First, the control unit 11 refers to the area level decision table 122 and decides the area level on the basis of the time frame T designated by the user (step S31). Further, in the description below, for simplicity of description, it is assumed that "level 3" is decided as the area level unless otherwise stated specially.

Subsequently, the control unit 11 selects a genre where the number of visit points belonging to the genre is the smallest and a genre where the number of visit points belonging to the genre is the second smallest from among the small genres designated by the user (step S32). For example, in the example of the visit point DB 121 shown in Fig. 8, the control unit 11 selects the "mountain" genre where the number of visit points is 100 and the "hot spring" genre where the number of visit points is 500. Further, in the process of step S32, for a genre that includes visit points having availability information, only the number of visit points that are available on a visit day designated by the user may be counted as the number of visit points. Further, it may be configured so that a visit point where the stock quantity is smaller than or equal to a predetermined number (for example, the stock quantity is zero) is not included in the visit points in the specification process.

Subsequently, the control unit 11 specifies combinations of visit points which are respectively selected from each genre selected in step S32 and which satisfy an area condition (step S33). Here, the area condition is a condition that "areas of two visit points are the same regarding the area level decided in step S31". In other words, if the areas of level 3 of two visit points selected from each small genre are the same, the combination of these visit points satisfies the area condition. Further, the control unit 11 specifies all combinations that satisfy the area condition in the process of step S33. For example, in the example of the visit point DB 121 shown in Fig. 8, the control unit 11 specifies eight combinations shown in Fig. 9(A).

Subsequently, the control unit 11 selects a small genre which has not yet been selected and where the number of visit points belonging to the small genre is the smallest from among the small genres designated by the user (step S34). The small genre which has not yet been selected is a small genre which has not been selected in the process of step S32 or the process of step S34 that has already been performed in a loop process. For example, in the example of the visit point DB 121 shown in Fig. 8, in the present process moved from the process of step S33, the control unit 11 selects the "soba restaurant" genre where the number of visit points is next smaller than those of the "mountain" genre and the "hot spring" genre.

Subsequently, the control unit 11 selects a visit point that satisfies the area condition with any of the combinations specified so far from among visit points classified in the small genre selected in the process of step S34 (step S35). Specifically, regarding the area level decided in the process of step S31, the control unit 11 selects a visit point that belongs to the same area as that to which a visit point included in any of combinations specified so far belongs (all areas of visit points included in a combination are the same in the present embodiment). Further, in the process of step S35, in a case in which there is a plurality of visit points that satisfy the area condition, the control unit 11 selects all the visit points. For example, in the example of the visit point DB 121 shown in Fig. 8, the control unit 11 selects seven visit points shown in Fig. 9(B) as visit points (soba restaurants) belonging to areas to which visit points included in each combination shown in Fig. 9(A) belong (that is, Tsukuba area, Fuji area, Nasu area, Bandai area, Myoko area, and Nikko area).

Subsequently, the control unit 11 adds each of the visit points selected in the process of step S35 to a combination which has so far been specified and which satisfies the area condition with the visit point (step S36). For example, in the example of the visit point DB 121 shown in Fig. 8, as shown in Fig. 9(C), the control unit 11 adds each of the visit points shown in Fig. 9(B) to each of the combinations shown in Fig. 9(A) so that the areas are the same. Thereby, eleven combinations shown in Fig. 9(C) are specified.

Subsequently, the control unit 11 deletes combinations that do not include the same number of visit points as the number of small genres selected in the process of step S32 and the process of step S34 from the combinations that have so far specified (step S37). For example, even when three small genres are selected, if there is a case that there is a combination that does not include three visit points among combinations that have so far specified the process of step S37 is performed to delete the combination. This is because it is not possible to visit all visit points of the small genres designated by the user when using this combination. For example, in the example of the visit point DB 121 shown in Fig. 8, the control unit 11 deletes the combination (combination of Mt. Nasudake and Sandogoya hot spring of Nasu area) that does not include the same number of visit points as the number of selected small genres (the number is three) from among the eleven combinations shown in Fig. 9(C). Thereby, the number of specified combinations becomes ten as shown in Fig. 9(D). Further, in the process of step S35, if the control unit 11 specifies, from among the combinations shown in Fig. 9(A), only combinations for which there is a visit point that satisfies the area condition and does not specify combinations for which there is no visit point that satisfies the area condition, the control unit 11 may omit the process of step S37.

Subsequently, the control unit 11 determines whether or not there is a small genre which is a small genre designated by the user and which has not yet been selected in the process of step S32 or the process of step S34 (step S38). At this time, if the control unit 11 determines that there is a small genre that has not yet been selected (step S38: YES), the control unit 11 proceeds to the process of step S34 and performs a loop process. On the other hand, in a case in which the control unit 11 determines that there is no small genre that has not yet been selected (step S38: NO), next, the control unit 11 outputs a list of the combinations of visit points that have so far been specified (except for the combination deleted in the process of step S38) as a specification result (step S39) and ends the process of the flowchart. Further, the control unit 11 can perform each process while storing a process result in the storage unit 12 for each process in the flowchart.

### [6. Example of Specification Result Display Screen 300]

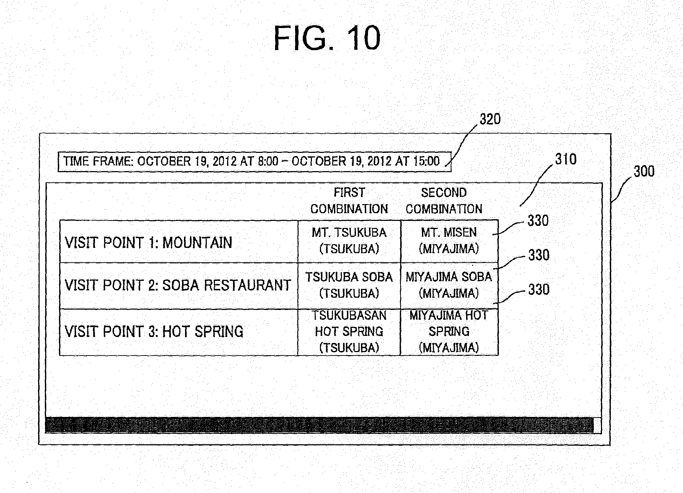

Here, the specification result display screen 300 will be described with reference to Fig. 10. Here, an example of a case in which the specification result includes two combinations that are a combination of "Mt. Tsukuba" (Tsukuba area), "Tsukuba soba" (Tsukuba area), and "Tsukubasan hot spring" (Tsukuba area) and a combination of "Mt. Misen" (Miyajima area), "Miyajima soba" (Miyajima area), and "Miyajima hot spring" (Miyajima area) will be described. In a specification result display area 310 in the specification result display screen 300, visit points corresponding to small genres designated by the user are displayed for each specified combination of visit points. The name and the area of each visit point are displayed in a visit point display area 330 in the specification result display area 310. Further, a time frame display section 320 is provided in the specification result display screen 300 and the time frame T designated by the user in the user designation screen 200 is displayed.

As described above, the control unit 11 (one example of "acquiring means" and "specifying means") of the information processing server 1 (one example of "information processing device") of the present embodiment acquires information indicating a plurality of small genres (one example of "genre") of visit points and the time frame T (one example of "period of time") of visit and specifies combinations of visit points which are respectively selected from each genre indicated by the acquired information and which can be visited within the time frame T on the basis of the time frame T indicated by the acquired information and areas (one example of "position information") of each visit point belonging to each small genre stored in the storage unit 12 (one example of "storage means"). Therefore, according to the information processing server 1, it is possible to specify combinations of visit points that can be visited within the time frame T from among visit points that are classified into a plurality of small genres of visit points.

Further, the control unit 11 specifies combinations of visit points belonging to each genre by prioritizing genres, where the number of visit points belonging to each of the genres is small, as in the process of step S32 and the process of step S34, so that it is possible to reduce the number of processing times related to the above process. Hereinafter, a specific example will be described. For example, a process for specifying the following combinations of visit points is performed:
"mountain" genre, to which 50 visit points belong,
"hot spring" genre, to which 200 visit points belong, and
"soba restaurant" genre, to which 1000 visit points belong. Here, a case (case 1) in which processes are performed in order from a process of combinations of visit points belonging to genres to which greater numbers of visit points belong and a case (case 2, the case of the present embodiment) in which the processes are performed in order from a process of combinations of visit points belonging to genres to which smaller numbers of visit points belong will be compared.

### (Case 1)

In the case 1, the number of processing times of the combination of the "hot spring" genre and the "soba restaurant" genre is "200 × 1000 = 200000". At this time, it is temporarily assumed that 150 combinations are appropriate as combinations included in combinations that are finally specified. Then, when processes of combinations of the "mountain" genre and the 150 combinations are further performed, the number of processing times is "150 × 50 = 7500". As a result, in the case 1, "200000 + 7500 = 207500" processes are required.

### (Case 2)

In the case 2, the number of processing times of the combination of the "mountain" genre and the "hot spring" genre is "50 × 200 = 10000". At this time, it is temporarily assumed that 30 combinations are appropriate as combinations included in combinations that are finally specified. When processes of combinations of the "soba restaurant" genre and the 30 combinations are further performed, the number of processing times is "30 × 1000 = 30000". As a result, in the case 2, "10000 + 30000 = 40000" processes are required.

In this way, it is possible to reduce the number of processing times in the case 2 employed in the present embodiment. Further, as a matter of course, the method of specifying combinations of visit points belonging to each genre by prioritizing genres, where the number of visit points belonging to each of the genres is small, is effective when the number of designated genres is three or more.

### [7. Modified Example]

### [7.1. Deciding Area Level According to the Number of Small Genres]

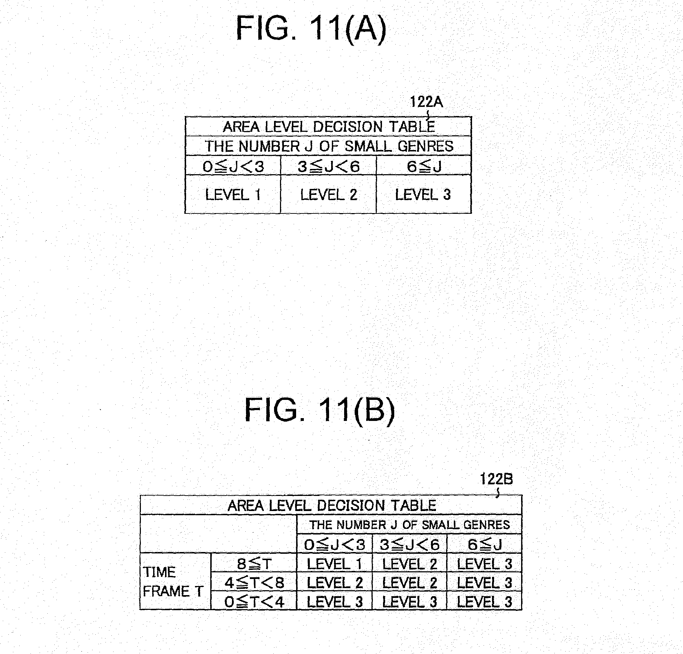

In the embodiment described above, the area level is decided according to the size of the time frame T designated by the user in the process of step S31; however, replacing with this or putting it together in this, the area level may be decided according to the number of small genres designated by the user. Specifically, the configuration of the area level decision table is changed. For example, as shown in Fig. 11(A), an area level decision table 122A is defined so that the greater the number J of small genres designated by the user (that is, the number of genres of visit points that the user wants to visit), the lower the decided area level. This is based on an idea that it is difficult to go around visit points spread in a large area in a case in which visiting many visit points. In a case in which the area level is decided according to the time frame T designated by the user and the number J of designated small genres, as shown in Fig. 11(B), an area level decision table 122B is defined so that the smaller the time frame T and the greater the number of small genres, the lower the decided area level.

### [7.2. Changing Area Condition According to the Number of Small Genres]

The area condition in the process of step S33 or the process of step S35 may be changed according to the number of small genres designated by the user. Specifically, the area condition is changed so that the greater the number of small genres designated by the user, the smaller the area from which visit points included in a combination are selected, and the smaller the number of small genres designated by the user, the larger the area from which visit points included in a combination are selected. For example, it is set that the number of small genres designated by the user is divided into three levels of "many", "normal", and "few" by threshold values (that can be arbitrarily set). Then, in a case in which the number of small genres designated by the user is "many", the area condition is set so that a combination including visit points belonging to one area is specified. Further, in a case in which the number of small genres designated by the user is "normal", the area condition is set so that a combination including visit points belonging to an area including one area and an area adjacent to the one area (one area in contact with at least a part of the one area) is specified. Further, in a case in which the number of small genres designated by the user is "few", the area condition is set so that a combination including visit points belonging to an area including one area and peripheral areas around the one area (a range of the peripheral areas around the one area can be appropriately set to be larger than the area including one area and an area adjacent to the one area) is specified. Also by this configuration, the greater the number of small genres designated by the user, the smaller the area from which visit points that can be specified are selected. Further, in the description here, the number of designated small genres is divided into three levels. However, the number of levels may be increased to four, five, and so on. Further, in the present modified example, it is preferable that an area DB from which an area adjacent to one area can be acquired by designating the one area is provided in the storage unit 12 and any areas adjacent to each other can be easily determined.

Here, the visit point combination specification process of the present modified example will be described. Here, for simplicity of description, it is assumed that the level 3 is decided as the area level and a combination including visit points belonging to one area or a range to an area adjacent to the one area is specified based on the number of small genres designated by the user. Further, visit points to be searched for are only the visit points whose names are specifically written in the visit point DB 121 shown in Fig. 8. Further, each set of Fuji area and Atami area, Futtsu area and Kisarazu area, Futtsu area and Tateyama area, and Tsukuba area and Mito area is defined as areas adjacent to each other. Under the condition described above, for example, a case in which the "mountain" genre, the "soba restaurant" genre, and the "hot spring" genre are designated by the user will be described.

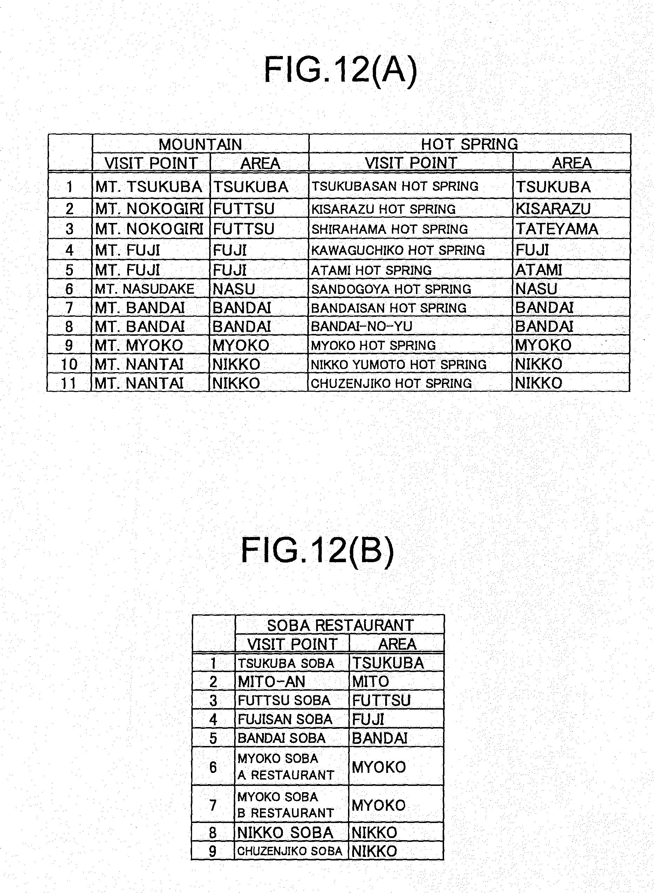

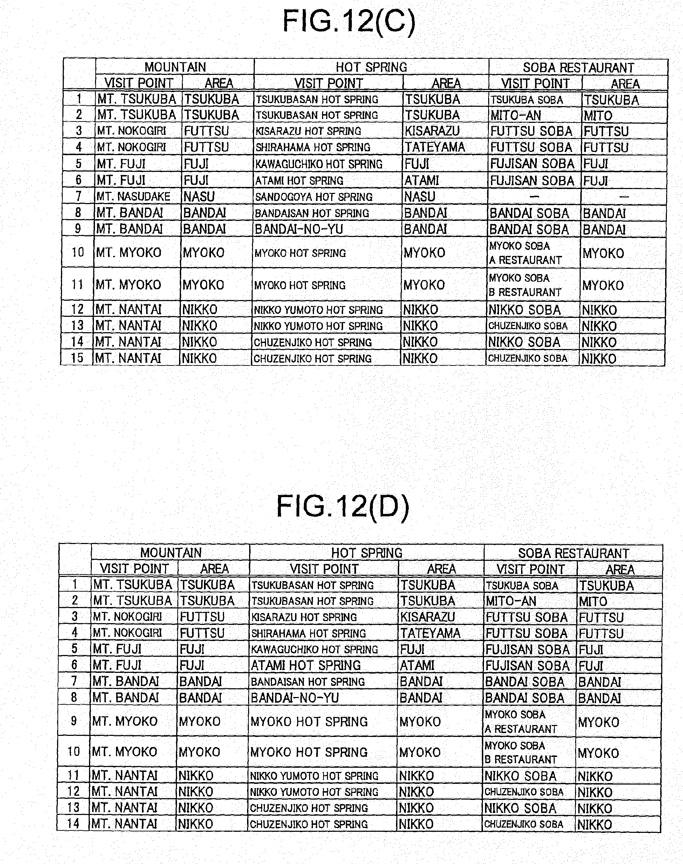

First, in the process of step S32 in Fig. 7, the control unit 11 selects the "mountain" genre where the number of visit points is 100 and the "hot spring" genre where the number of visit points is 500. Subsequently, in the process of step S33, the control unit 11 specifies eleven combinations shown in Fig. 12(A) as combinations of visit points belonging to the same area or areas adjacent to each other. Subsequently, in the process of step S34, the control unit 11 selects the "soba restaurant" genre where the number of visit points is next smaller than those of the "mountain" genre and the "hot spring" genre. Subsequently, in the process of step S35, the control unit 11 selects nine visit points shown in Fig. 12(B) as visit points (soba restaurants) belonging to the same areas as those to which any of the visit points included in the combinations shown in Fig. 12(A) belongs (that is, Tsukuba area, Fuji area, Nasu area, Bandai area, Myoko area, and Nikko area) or areas adjacent to these areas. Subsequently, in the process of step S36, as shown in Fig. 12(C), the control unit 11 adds each of the visit points shown in Fig. 12 (B) to a combination where any of visit points included in the combination belongs to the same area as or an area adjacent to the area, to which the visit point to be added belongs, among the combinations show in Fig. 12(A). Thereby, fifteen combinations shown in Fig. 12(C) are specified. Subsequently, in the process of step S37, the control unit 11 deletes the combination (combination of Mt. Nasudake and Sandogoya hot spring of Nasu area) that does not include the same number of visit points as the number of selected small genres (the number is three) from among the fifteen combinations shown in Fig. 12(C). Thereby, the number of specified combinations becomes fourteen shown in Fig. 12(D).

The present modified example may be applied by combining with the modified example described above.

### [7.3. Acquiring Scheduled Staying Time]

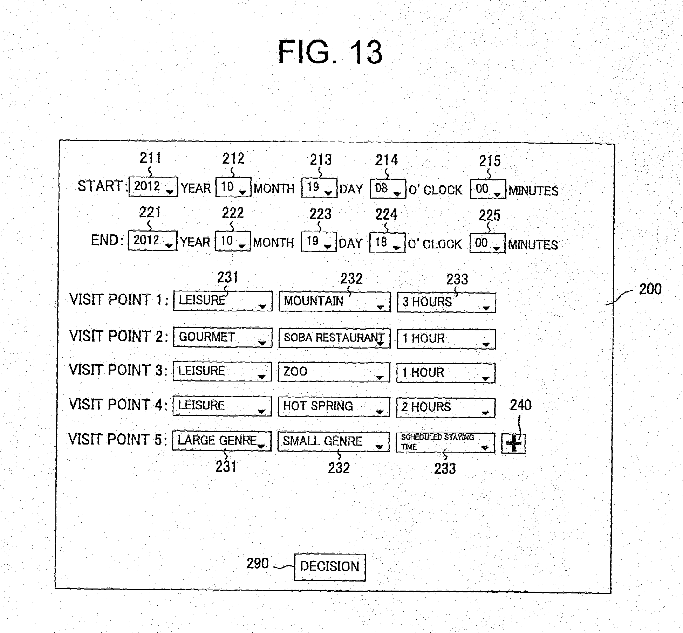

The user is caused to designate a scheduled staying time (desired staying time) for each small genre, and combinations of visit points taking into account the request of the user for the scheduled staying time may be specified by comparing the scheduled staying time with the standard staying time registered in the visit point DB 121. Specifically, as shown in Fig. 13, a scheduled staying time drop-down list 233 is provided for each genre of visit points in the user designation screen 200. In the scheduled staying time drop-down list 233, for example, the scheduled staying time can be designated in units of 15 minutes. Then, in a case in which the user clicks the decision button 290, it is constructed that information (referred to as "user-designated information") indicating the designated time frame T (the start date and time and the end date and time), the types of the small genres, and the scheduled staying time for each small genre is transmitted to the information processing server 1.

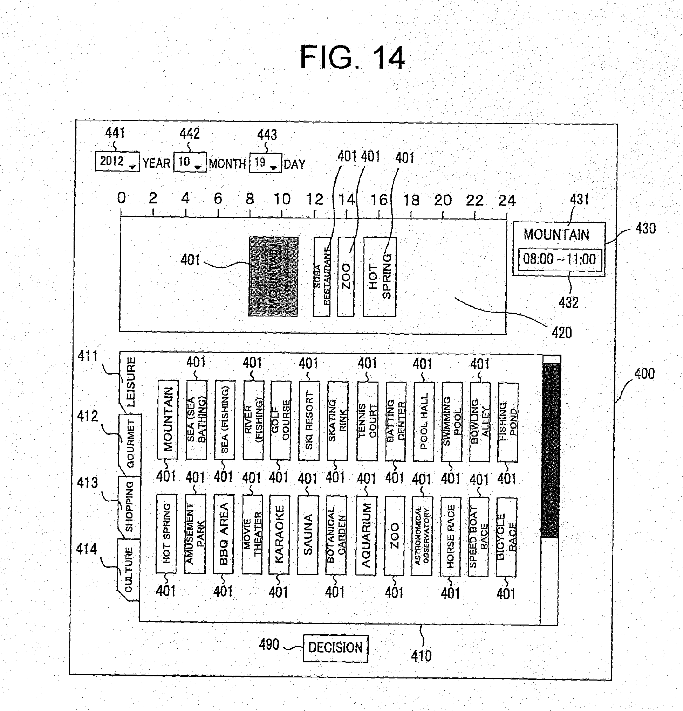

As the user designation screen, a user designation screen 400 shown in Fig. 14 may be employed. In the user designation screen 400, a year designation drop-down list 441 for designating a visit day, a month designation drop-down list 442 for designating a month, and a day designation drop-down list 443 for designating a day are provided.

Further, in the user designation screen 400, a time table area 420 and a genre icon list area 410 are provided. In the genre icon list area 410, genre icons 401 that indicate small genres belonging to a large genre corresponding to a tab selected from among a leisure genre tab 411, a gourmet genre tab 412, a shopping genre tab 413, and a culture genre tab 414, which correspond to a large genre, are displayed. The genre icon 401 can be arranged in the time table area 420 by a drag operation. Further, when a genre icon 401 arranged in the time table area 420 is selected, the name of the small genre corresponding to the selected genre icon 401 is displayed in a title section 431 in a visit time slot designation area 430. Further, in the visit time slot designation area 430, a visit time slot designation section 432 is provided, so that a visit time slot for the small genre whose name is displayed in the title section 431 can be inputted.

Further, in the user designation screen 400, a decision button 490 is provided. When the user completes the designation of the small genres and the input of the visit time slots and clicks the decision button 490, information (referred to as "user-designated information"), which indicates the designated time frame T (in the user designation screen 400, the arrival time (08:00 in the example of Fig. 14) of the visit time slot designated for the small genre ("mountain" genre in the example of Fig. 14) of the first visit point is defined as the start time of the time frame T, and the departure time (17:00 in the example of Fig. 14) of the visit time slot designated for the small genre ("hot spring" genre in the example of Fig. 14) of the last visit point is defined as the end time of the time frame T), the types of the small genres, and each visit time slot, is transmitted to the information processing server 1. Further, in a case in which the user designation screen 400 is used, the scheduled staying time can be calculated from the difference between the visit start time and the visit end time, which indicates the visit time slot.

Further, it is set that the control unit 11 specifies combinations including visit points where a relationship between the scheduled staying time and the standard staying time satisfies a predetermined staying time condition. As the staying time condition, several patterns can be considered. Here, two patterns will be described as an example.

Pattern 1: a pattern which makes it a condition that a time difference between the scheduled staying time and the standard staying time is within an allowable time difference (for example, one hour). For example, in a case in which the allowable time difference is one hour, for a small genre for which the scheduled staying time is three hours, a visit point, for which the standard staying time is 2 hours (= 3 hours - 1 hour) or more and 4 hours (= 3 hours + 1 hour) or less, satisfies the staying time condition.

Pattern 2: a pattern which makes it a condition that the standard staying time is longer than or equal to the scheduled staying time.

Before or after performing the determination related to the area condition in the process of step S33 or the process of step S35, the control unit 11 performs the determination related to the staying time condition for the visit points for which the determination related to the area condition will be performed or for which the determination related to the area condition has been performed. Further, instead of performing these processes, immediately before performing the process of step S39, it may be determined whether or not there is a visit point that does not satisfy the staying time condition among the visit points included in the combinations for all the combinations that have so far been specified, and if there is a visit point that does not satisfy the staying time condition, the combination including the visit point may be deleted.

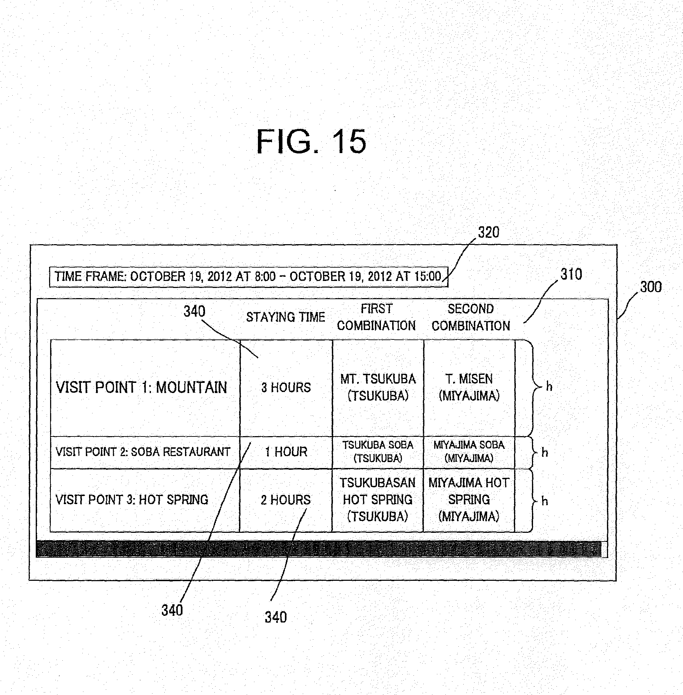

Here, one example of the specification result display screen 300 of the present modified example will be described. In the present modified example, the user designates the scheduled staying time (desired staying time) for each small genre, so that, as shown in Fig. 15, in the specification result display screen 300, it is set that a staying time display area 340 are provided for each visit point corresponding to each small genre and the staying time at each visit point is displayed in the staying time display area 340. Further, the width h of the visit point display area 330 and the staying time display area 340 is adjusted according to the length of the staying time at each visit point. Thereby, the user can intuitively grasp the staying time at each visit point. Further, the width h of the visit point display area 330 and the staying time display area 340 may be decided according to the ratio of the length of the staying time at each visit point. Alternatively, in order to know the order of the lengths of the staying time at each visit point, for example, it may be set that the width h of the visit point at which the staying time is the shortest is set to a length a, the width h of the visit point at which the staying time is the second shortest is set to a length 2a, ···, and the width h of the visit point at which the staying time is the nth shortest is set to a length na.

The present modified example may be applied by combining with any of the modified examples described above.

### [7.4. Deciding Area Level According To Allowable Traveling Time]

It may be set that the control unit 11 acquires the scheduled staying time for each small genre and the scheduled time frame which are designated by the user in the same manner as in the modified example [7.3] described above, calculates an allowable traveling time that is allowed to be used for traveling by subtracting a sum of the scheduled staying time of each genre from the time frame T, and may decide the area level according to the allowable traveling time. Specifically, the configuration of the area level decision table is changed. That is to say, it is set that the area level is defined so that the shorter the allowable traveling time is, the lower the area level to be decided is. This is based on an idea that it is difficult to go around visit points spread in a large area in a case in which the allowable traveling time is short.

The present modified example may be applied by combining with any of the modified examples described above.

### [7.5. Comparing Sum of Traveling Time between Visit points with Allowable Traveling Time]

It may be set that the control unit 11 calculates the allowable traveling time in the same manner as in the modified example [7.4] described above, determines whether or not a total traveling time obtained by summing the traveling time between the visit points is longer than the allowable traveling time for all the combinations, which have so far been specified, before performing the process of step S39, and may delete combinations for which the total traveling time is determined to be longer than the allowable traveling time as a result of the determination and then perform the process of step S39.

Here, a method of specifying the traveling time between the visit points by the control unit 11 will be described. As one method, there is a method in which a traveling time DB in which traveling time required to travel between visit points (for example, traveling time of from "Mt. Tsukuba" to "Tsukubasan Hot Spring" is 30 minutes) is registered is provided in the storage unit 12 in advance and the control unit 11 specifies the traveling time between the visit points by referring to the traveling time DB. Alternatively, there is a method in which the control unit 11 refers to the visit point DB 121 and calculates the traveling time between two locations from the latitude and longitude of the two locations. In this method, the control unit 11 may calculate the traveling time from a linear distance between the two locations. However, it is more preferable to calculate the traveling time by further considering an actual traveling path and an actual transportation means for traveling by using a known navigation technique. In this way, regarding the traveling time between the visit points, the traveling time calculated in advance may be acquired as in the former method, or the traveling time may be dynamically calculated as in the latter method.

The present modified example may be applied by combining with any of the modified examples described above.

### [7.6. Adding Reservation Function]

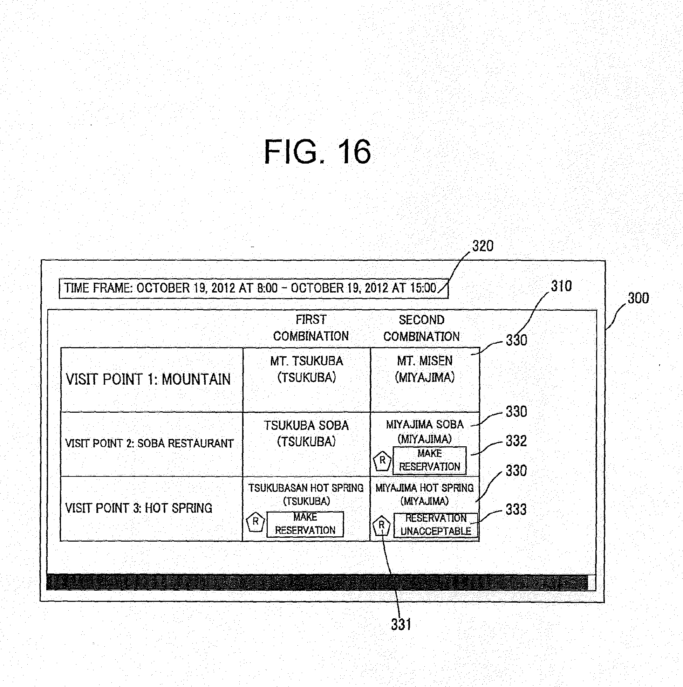

As shown in Fig. 16, in the specification result display screen 300, it is possible to display whether or not each visit point is a facility that accepts a reservation (referred to as "reservation target facility") and apply a reservation to the reservation target facility. Specifically, in the visit point display area 330 that displays a visit point of a reservation target facility, a reservation target facility icon 331 indicating that the visit point is a reservation target facility is displayed in addition to the name and the area of the visit point. The example of Fig. 16 indicates that Miyajima soba, Miyajima hot spring, and Tsukubasan hot spring are the reservation target facilities. Further, a reservation application button 332 is displayed in the visit point display area 330 that displays a visit point which is a reservation target facility and to which a reservation can be applied (which has an empty reservation). In a case in which the user clicks the reservation application button 332, it is set that the screen is changed to a predetermined reservation application screen to enable the user to apply a reservation. On the other hand, a reservation unacceptable sign 333 is displayed in the visit point display area 330 that displays a visit point to which a reservation cannot be applied (which has no empty reservation).

In the present modified example, it is set that a reservation management DB for performing reservation management for each reservation target facility is provided in the storage unit 12. In the reservation management DB, it is set that information by which it is possible to determine whether or not a reservation target facility can accept a reservation of a designated day, price information, information indicating the number of empty reservations, and the like are registered for each reservation target facility.

Then, before performing the process of step S39, the control unit 11 determines whether a visit point of a reservation target facility is included in a combination for all the combinations that have so far been specified, and creates a web page so that the reservation target facility icon 331 is displayed in the visit point display area 330 for the visit points that are reservation target facilities.

Further, it is set that the control unit 11 determines whether or not a visit point of a reservation target facility can accept a reservation of a day designated by the user by referring to the reservation management DB. At this time, it is set that the control unit 11 specifies the day designated by the user from the start date and time or the end date and time that define the time frame T designated by the user. Then, the control unit 11 creates a web page so that the reservation application button 332 is displayed in the visit point display area 330 for the reservation target facilities that can accept a reservation. On the other hand, the control unit 11 creates a web page so that the reservation unacceptable sign 333 is displayed in the visit point display area 330 for the reservation target facilities that cannot accept a reservation.

Further, in a combination including a reservation target facility, in a case in which the reservation target facility cannot accept a reservation, it may be set that the control unit 11 need not display the combination in the specification result display screen 300. In this case, combinations including a reservation target facility that can accept a reservation are displayed, so that the convenience of the user is improved.

The present modified example may be applied by combining with any of the modified examples described above.

### [7.7. Acquiring Visit Time Slot and Scheduled Staying Time]

It may be set that the user is caused to designate a visit time slot (a desired visit time slot), and combinations of visit points taking into account the request of the user for the visit time slot and the scheduled staying time is specified. The scheduled staying time can be acquired from the visit time slot (for example, if the visit time slot is "12:00 - 14:00", the scheduled staying time is "2 hours").

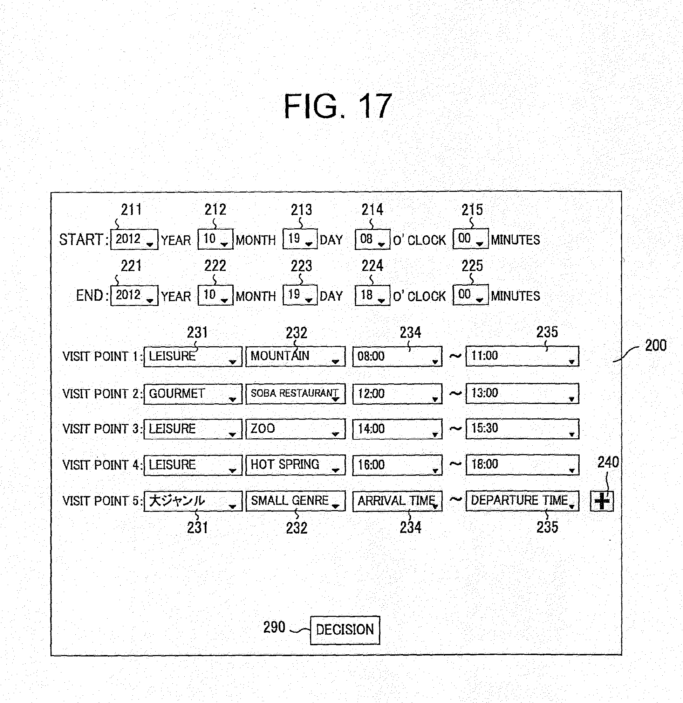

Specifically, as shown in Fig. 17, in the user designation screen 200, an arrival time drop-down list 234 and a departure time drop-down list 235 for designating the visit time slot are provided for each genre of visit points. In the arrival time drop-down list 234 and the departure time drop-down list 235, it is set that the arrival time and the departure time can be designated, respectively, in predetermined units of time (for example, in units of 15 minutes). Then, in a case in which the user clicks the decision button 290, it is set that information (referred to as "user-designated information") indicating the designated time frame T (the start date and time and the end date and time), the types of the small genres, and the visit time slot (the scheduled staying time) for each small genre is transmitted to the information processing server 1. In the present modified example, it may be set that the user designation screen 400 (see Fig. 14) described in [7.3] is used.

As described in [7.3], it is set that the control unit 11 specifies combinations of visit points taking into account the scheduled staying time and then deletes combinations including a visit point that cannot be visited in the visit time slot designated by the user from all the specified combinations, so that the control unit 11 specifies combinations of visit points taking into account the visit time slot and the scheduled staying time. Hereinafter, a process for deleting combinations including a visit point that cannot be visited in the visit time slot designated by the user will be described.

First, the control unit 11 acquires a visiting order of the visit points from the visit time slots designated for each small genre by the user and calculates the allowable traveling time allowed between the visit points. For example, in a case in which the visit time slot of the "mountain" genre is designated as "08:00 - 11:00", the visit time slot of the "soba restaurant" genre is designated as "12:00 - 13:00", the visit time slot of the "zoo" genre is designated as "14:00 - 15:30", and the visit time slot of the "hot spring" genre is designated as "16:00 - 18:00", the control unit 11 acquires a visiting order of "mountain → soba restaurant → zoo → hot spring", calculates the allowable traveling time from the "mountain" to the "soba restaurant" to be 1 hour of "11:00 - 12:00", calculates the allowable traveling time from the "soba restaurant" to the "zoo" to be 1 hour of "13:00 - 14:00", and calculates the allowable traveling time from the "zoo" to the "hot spring" to be 30 minutes of "15:30 - 16:00".

Further, the control unit 11 rearranges the visit points according to the visiting order for each combination of visit points taking into account the scheduled staying time and specifies time required to travel between the visit points. Further, the method for calculating the traveling time between two locations is described in [7.5], so that the description of the method is omitted. Then, the control unit 11 specifies combinations in which each of the traveling time between the visit points is within the calculated allowable traveling time, respectively, (that is, combinations in which it is possible to travel between any two visit points among the visit points within allowable traveling time respectively) from among the combinations taking into account the scheduled staying time.

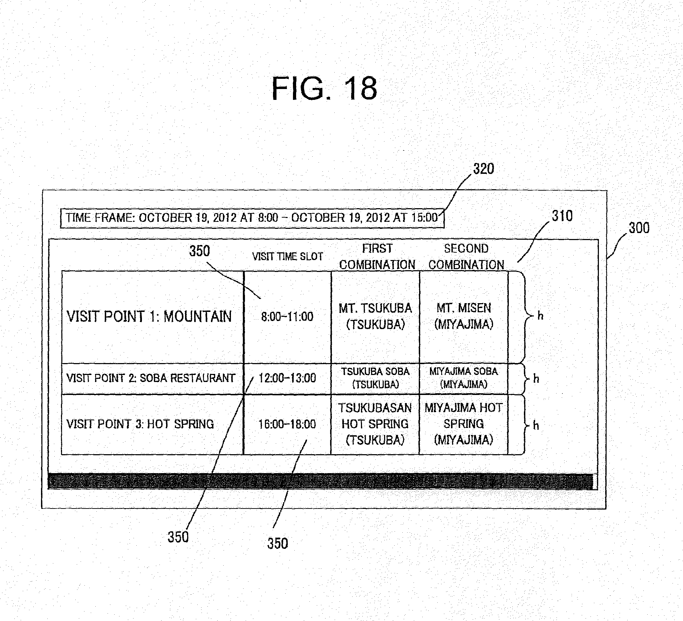

Here, one example of the specification result display screen 300 of the present modified example will be described. In the present modified example, the user designates the visit time slot for each small genre, so that, as shown in Fig. 18, in the specification result display screen 300, it is set that a visit time slot display area 350 is provided for each visit point corresponding to each small genre and the visit time slot at each visit point is displayed in the visit time slot display area 350. Further, the width h of the visit point display area 330 and the visit time slot display area 350 are adjusted according to the length of the staying time at each visit point. Thereby, the user can intuitively grasp the staying time at each visit point. Further, the width h of the visit point display area 330 and the visit time slot display area 350 may be decided according to the ratio of the length of the staying time at each visit point. Alternatively, in order to know the order of the lengths of the staying time at each visit point, for example, it may be set that the width h of the visit point at which the staying time is the shortest is set to a length a, the width h of the visit point at which the staying time is the second shortest is set to a length 2a, ..., and the width h of the visit point at which the staying time is the nth shortest is set to a length na.

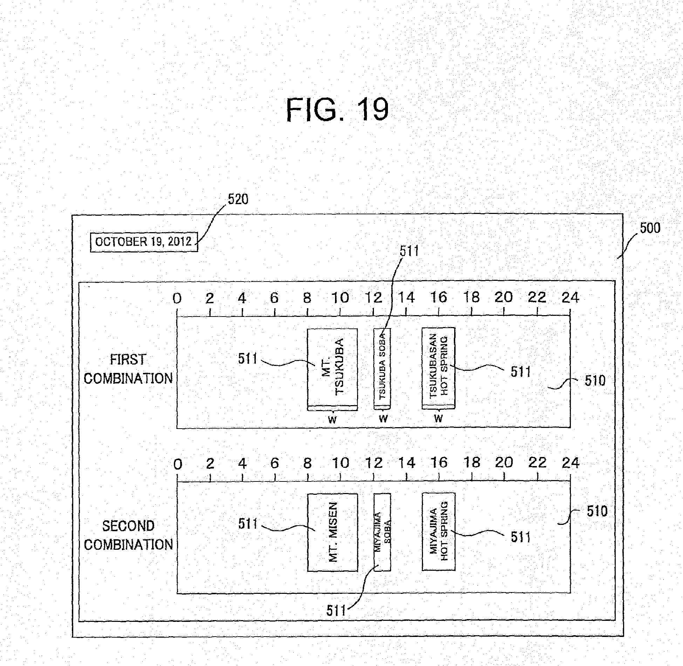

The specification result display screen may be a specification result display screen 500 as shown in Fig. 19. In the specification result display screen 500, a time table area 510 is displayed for each specified combination of visit points. In the time table area 510, visit point icons 511 indicating visit points included in the specified combination are displayed in a position and a width w corresponding to each visit time slot. Thereby, the user can intuitively grasp the visit time slot and the staying time at each visit point. Further, the name of the visit point is displayed inside the visit point icon 511. Further, in the visit point icon 511, it may be set that the name of the area is displayed along with the name of the visit point. Further, a visit day display section 520 is provided in the specification result display screen 500 and the visit day designated by the user in the user designation screen 200 or 400 is displayed in the visit day display section 520.

In this way, combinations of visit points taking into account the scheduled staying time and the visit time slot at each visit point are specified, so that it is possible to present combinations of visit points, each of which the user can visit in a visit time slot designated by the user, to the user. In addition, in the present modified example, there may be a case in which the specification result is zero combination or a small number of combinations such as a few combinations. In such the case, as a method for increasing the number of combinations of the specification result, there is a method for alleviating the specification condition. Here, three methods for alleviating the specification condition will be described. It may be set that the control unit 11 performs at least any one of the three methods in a case in which a predetermined condition is satisfied. As the predetermined condition, conditions such as, for example, "the number of combinations of the specification result (the number of specified combinations) is smaller than or equal to M (M can be arbitrarily set, M may be 0)" or "the number of visit points corresponding to each small genre in the specified combinations is smaller than or equal to N (N can be arbitrarily set)" can be set.

The first method is a method of specifying the combinations of visit points after shifting at least any one of the visit time slots designated by the user backward or forward by a predetermined time. For example, in the example of the user designation screen 200 shown in Fig. 17, if the visit time slot of the "soba restaurant" genre is shifted forward by 30 minutes to "11:30 - 12:30", the allowable traveling time from the "soba restaurant" to the "zoo" can be 1 hour and 30 minutes of "12:30 - 14:00". In this way, when the visit time slot is shifted forward or backward, the allowable traveling time between the visit points changes, so that there is a possibility that a greater number of combinations of the specification result is obtained. Further, if the number of combinations of the specification result is still small, it may be set that the combinations of visit points is further specified after further changing the visit time slot to be shifted or changing the number of visit time slots to be shifted. Further, it is set that the control unit 11 presents predetermined information based on the combination of visit points specified by shifting a visit time slot to the user. For example, it is set that the control unit 11 (one example of "generating means") generates a message (one example of "information") indicating how much the number of specified combinations changes by moving a visit time slot forward or backward, such as "N more combinations are specified by shifting the visit time slot of "hot spring" backward by 30 minutes" and causes the user terminal 3 to display the message.

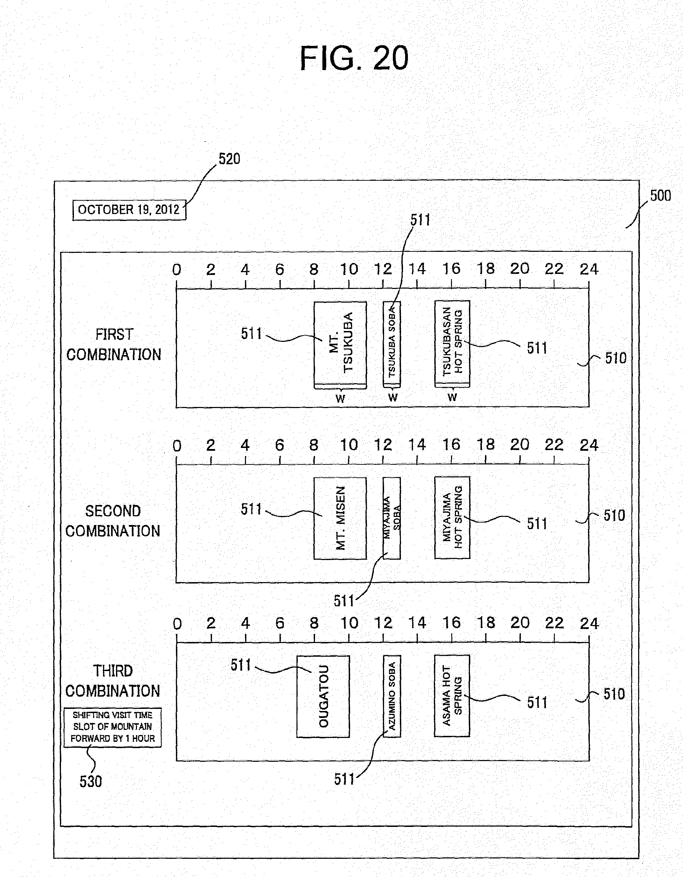

Here, a screen example of the specification result display screen 500 showing combinations specified after a visit time slot is shifted will be described with reference to Fig. 20. Further, the specification result display screen 500 shown in Fig. 20 is a modified example of the specification result display screen 500 shown in Fig. 19, so that the description of the same portions as those in Fig. 19 will be omitted. In the example of Fig. 20, in a case in which "08:00 - 11:00" is designated as the visit time slot of the "mountain" genre, "12:00 - 13:00" is designated as the visit time slot of the "soba restaurant" genre, and "15:00 - 17:00" is designated as the visit time slot of the "hot spring" genre, combinations specified without shifting any visit time slot are displayed as the first combination and the second combination and a combination specified after shifting forward the visit time slot of the "mountain" genre by one hour is displayed as the third combination. As shown in Fig. 20, the visit point icon 511 indicating "Ougatou" belonging to the "mountain" genre of the third combination is shifted leftward by one hour as compared with the visit point icons 511 indicating "Mt. Tsukuba" and "Mt. Misen" which belong to the "mountain" genre of the first and the second combinations. Thereby, the user can intuitively grasp how much the visit time slot is shifted and that the user will visit a visit point for which the visit time slot is shifted to a certain time slot. Further, in the specification result display screen 500 shown in Fig. 20, a message 530 indicating that the third combination is a combination that is specified after shifting forward the visit time slot of the visit point belonging to the "mountain" genre by 1 hour is displayed. Thereby, the user can grasp that the third combination is a combination specified after shifting the visit time slot, how much the visit time slot is shifted, and further whether the visit time slot is shifted forward or backward.

The second method is a method of specifying the combinations of visit points after shortening or extending at least any one of the scheduled staying times designated by the user. For example, when the scheduled staying time is shortened, the allowable traveling time between the previous visit point or the next visit point and the current visit point increases, so that there is a possibility that a greater number of combinations of the specification result may be obtained. On the other hand, when the scheduled staying time is extended, visit points where the standard staying time is long are extracted, so that there is a possibility that a greater number of combinations of the specification result may be obtained. Further, if the number of combinations of the specification result is still small, it may be set that the combinations of visit points is further specified after changing the time to be shortened or to be extended or changing the number of the scheduled staying times to be changed. Further, it is set that the control unit 11 presents predetermined information based on the combination of visit points specified by shortening or extending the scheduled staying time to the user. For example, it is set that the control unit 11 (one example of "generating means") generates a message (one example of "information") indicating how much the number of specified combinations changes by shortening or extending the scheduled staying time, such as "N more combinations are specified by shortening the scheduled staying time of "hot spring" by 30 minutes" and causes the user terminal 3 to display the message.

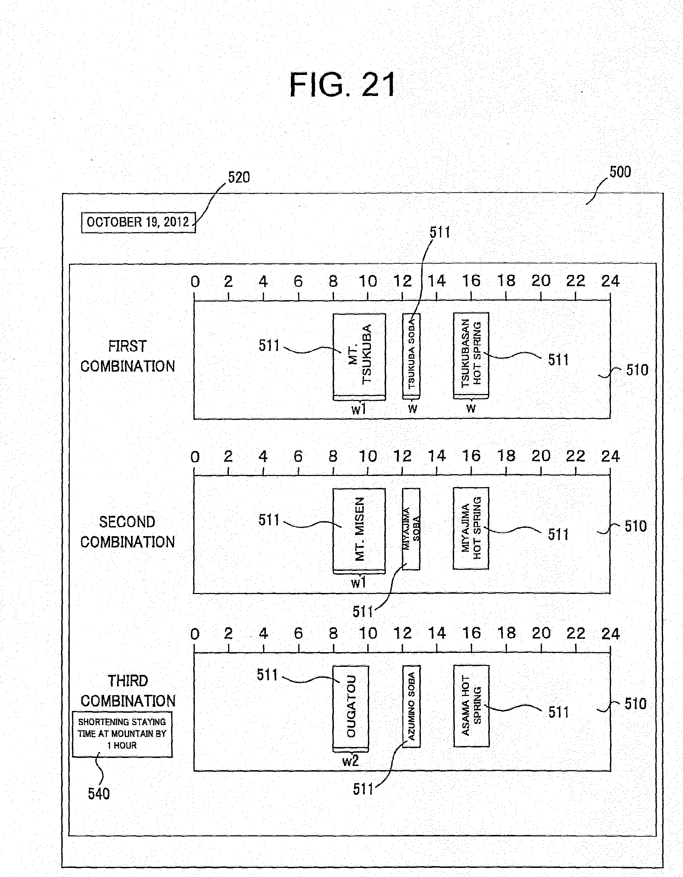

Here, a screen example of the specification result display screen 500 showing combinations specified after a scheduled staying time is shortened will be described with reference to Fig. 21. Further, the specification result display screen 500 shown in Fig. 21 is a modified example of the specification result display screen 500 shown in Fig. 19, so that the description of the same portions as those in Fig. 19 will be omitted. In the example of Fig. 21, in a case in which "08:00 - 11:00" is designated as the visit time slot of the "mountain" genre, "12:00 - 13:00" is designated as the visit time slot of the "soba restaurant" genre, and "15:00 - 17:00" is designated as the visit time slot of the "hot spring" genre, combinations specified without shortening or extending any scheduled staying time are displayed as the first combination and the second combination and a combination specified after shortening the scheduled staying time of the "mountain" genre by one hour to "08:00 - 10:00" is displayed as the third combination. As shown in Fig. 21, the width w2 of the visit point icon 511 indicating "Ougatou" belonging to the "mountain" genre of the third combination is smaller than the width w1 of the visit point icons 511 indicating "Mt. Tsukuba" and "Mt. Misen" which belong to the "mountain" genre of the first or the second combination by one hour (while the visit point icons 511 indicating "Mt. Tsukuba" and "Mt. Misen" have the width w1 corresponding to "08:00 - 11:00", the visit point icon 511 indicating "Ougatou" has the width w2 corresponding to "08:00 - 10:00"). Thereby, the user can intuitively grasp how much the staying time is shortened or the time slot of the visit time slot changed by shortening the staying time. Further, in the specification result display screen 500 shown in Fig. 21, a message 540 indicating that the third combination is a combination that is specified after shortening the staying time at the visit point belonging to the "mountain" genre by one hour is displayed. Thereby, the user can grasp that the third combination is a combination specified after shortening the staying time and how much the staying time is shortened.

The third method is a method of specifying the combinations of visit points after changing at least a part of the visiting order designated by the user. For example, in a case in which the visiting order of A genre → B genre → C genre is designated by the user, the visiting order is changed to a visiting order of B genre → A genre → C genre or a visiting order of A genre → C genre → B genre. There is a case in which the traveling time between visit points can be changed or a useless traveling time can be reduced by changing the visiting order in this way, so that the probability of obtaining a greater number of specification results increases. Further, if the number of combinations of the specification result does not increase by one time change, it may be set that the combinations of visit points is further specified by further changing the visiting order. Further, it is set that the control unit 11 presents predetermined information based on the combination of visit points specified by changing the visiting order. For example, it is set that the control unit 11 (one example of "generating means") generates a message (one example of "information") indicating how much the number of specified combinations changes by changing the visiting order, such as "N more combinations are specified by changing the visiting order of mountain → soba restaurant → hot spring to a visiting order of mountain → hot spring → soba restaurant" and causes the user terminal 3 to display the message.

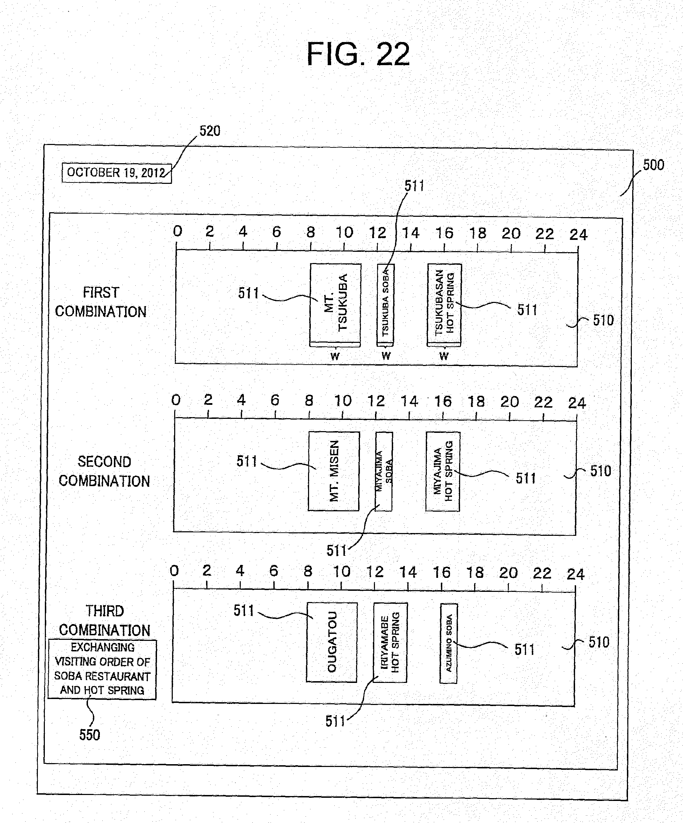

Here, a screen example of the specification result display screen 500 showing combinations specified after changing the visiting order will be described with reference to Fig. 22. Further, the specification result display screen 500 shown in Fig. 22 is a modified example of the specification result display screen 500 shown in Fig. 19, so that the description of the same portions as those in Fig. 19 will be omitted. In the example of Fig. 22, in a case in which "08:00 - 11:00" is designated as the visit time slot of the "mountain" genre, "12:00 - 13:00" is designated as the visit time slot of the "soba restaurant" genre, and "15:00 - 17:00" is designated as the visit time slot of the "hot spring" genre, combinations specified without changing the visiting order are displayed as the first combination and the second combination and a combination specified after exchanging the visiting order of the "soba restaurant" genre and the "hot spring" genre without changing the staying time at each visit point as the third combination. As shown in Fig. 22, in the third combination, the visit point icon 511 indicating "Iriyamabe hot spring" belonging to the "hot spring" genre and the visit point icon 511 indicating "Azumino soba" belonging to the "soba restaurant" genre are displayed to form the visiting order of "mountain" genre → "hot spring" genre → "soba restaurant" genre. Either of the visit time slots at which these visit point icons 511 are displayed are decided based on the traveling time between the visit points calculated by the control unit 11. Further, in the specification result display screen 500 shown in Fig. 22, a message 550 indicating that the third combination is a combination that is specified after exchanging the visiting order of the visit point belonging to the "soba restaurant" genre and the visit point belonging to the "hot spring" genre is displayed. Thereby, the user can grasp that the third combination is a combination that is specified after exchanging the visiting order of the visit point belonging to the "soba restaurant" genre and the visit point belonging to the "hot spring" genre.

The present modified example may be applied by combining with any of the modified examples described above.

### [7.8. Overlap Designation of Visit Time Slot]

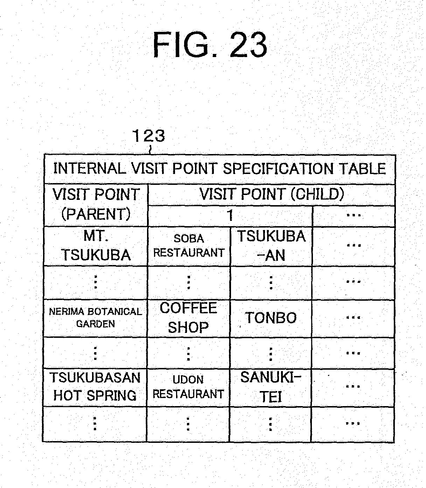

As a further modified example of the modified example [7.7] described above, a case in which any of the visit time slots designated for each small genre is included in another visit time slot of the visit time slots will be described. For example, in a case in which "08:00 - 13:00" is designated as the visit time slot of the "mountain" genre and "11:00 - 12:00" is designated as the visit time slot of the "soba restaurant" genre, it may be set that a combination of a mountain including a soba restaurant along its trail and the soba restaurant is specified. In the present modified example, as shown in Fig. 23, it is set that an internal visit point specification table 123 that associates a visit point (visit point (parent)) including another visit point inside thereof with the other visit point (visit point (child)) is provided in the storage unit 12. Further, in the internal visit point specification table 123, it is preferable to associate the small genre of the visit point along with the visit point (child).

Then ,in a case in which the visit time slots are designated so that one visit time slot is included in another visit time slot as in the above example, it is set that the control unit 11 refers to the internal visit point specification table 123 and specifies two visit points, where one visit point corresponding to one visit time slot including the other visit time slot includes the other visit point corresponding to the other visit time slot included in the one visit time slot, as at least a part of a combination of visit points. Thereby, even in a case in which any of the visit time slots of the designated visit time slots is/are included in any other visit time slots, it is possible to specify the combinations of visit points.

The present modified example may be applied by combining with any of the modified examples described above.

### [7.9. Presenting Combinations of Visit points Every Time Small Genre is Selected in User Designation Screen]

In the embodiment described above, the combinations of visit points are specified based on the time frame T and a plurality of small genres that are designated by the user in the user designation screen 200 by the time when the user clicks the decision button 290. However, instead of the above, every time the user designates a small genre after designating the time frame T (except for a case in which the user designates the first genre, because the combination of visit points cannot be specified), it may be set that the information processing server 1 acquires the time frame T and the types of the small genres and specifies the combinations of visit points and the user terminal 3 presents the combinations of visit points. In this case, it may be set that the specified combinations are presented in the user designation screen 200 or the specified combinations are presented in another window.

The present modified example may be applied by combining with any of the modified examples described above.

### Reference Signs List

- 1: Information processing server
- 11: Control unit
- 12: Storage unit
- 121: Visit point DB
- 122: Area level decision table
- 13: Communication unit
- 14: Input/output interface unit
- 15: System bus
- 3: User terminal
- 31: Control unit
- 32: Storage unit
- 33: Communication unit
- 34: Display unit
- 35: Operation unit
- NW: Network

## Claims

1. An information processing apparatus **characterized in that** the information processing apparatus comprises:
an acquiring means that acquires information indicating a plurality of genres of visit points and a period of visiting; and
a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

2. The information processing apparatus according to claim 1 **characterized in that**, wherein
the specifying means specifies the combination by deciding an area from which visit points to be included in the combination are selected based on at least either one of the number of the genres or the period of visiting which are acquired by the acquiring means and selecting visit points to be included in the combination from the decided area.

3. The information processing apparatus according to claim 2 **characterized in that**, wherein
the specifying means decides, based on the number of genres acquired by the acquiring means, the area so that the greater the number of the genres, the smaller the area, and the smaller the number of the genres, the larger the area.

4. The information processing apparatus according to claim 2 **characterized in that**, wherein
the specifying means decides, based on the period of visiting acquired by the acquiring means, the area so that the shorter the period of visiting, the smaller the area, and the longer the period of visiting, the larger the area.

5. The information processing apparatus according to any one of claims 1 to 4 **characterized in that**, wherein
the specifying means specifies the combination of visit points by prioritizing genres where the number of visit points belonging to each of the genres is small.

6. The information processing apparatus according to any one of claims 1 to 5 **characterized in that**, wherein
the acquiring means further acquires information indicating a visit time slot for each visit point, and
the specifying means specifies a traveling time required to travel between each visit point and specifies the combination where each visit point can be respectively visited in each visit time slot based on the specified traveling time and the acquired information indicating a visit time slot for each visit point.

7. The information processing apparatus according to claim 6 **characterized in that**, wherein
the specifying means specifies the combination by shifting at least any one of the acquired visit time slots forward or backward by a predetermine time.

8. The information processing apparatus according to claim 7 **characterized in that** the information processing apparatus further comprises:
a generating means that generates information indicating how much the number of the specified combinations is changed by shifting the visit time slot forward or backward by a predetermined time on the basis of the combinations specified by the specifying means by shifting the visit time slot forward or backward by the predetermined time and the combinations specified by the specifying means without shifting the visit time slot forward or backward by the predetermined time.

9. The information processing apparatus according to any one of claims 1 to 8 **characterized in that**, wherein
the acquiring means further acquires information indicating a visit time slot for each visit point, and
in a case in which a visit time slot for any one of visit points indicated by the acquired information is included in a visit time slot for another visit point, the specifying means specifies the two visit points, where one visit point corresponding to one visit time slot including the other visit time slot includes the other visit point corresponding to the other visit time slot included in the one visit time slot, as at least a part of the combination of visit points.

10. The information processing apparatus according to any one of claims 1 to 9 **characterized in that**, wherein
the acquiring means further acquires information indicating an allowable traveling time allowed to travel between each visit point, and
the specifying means specifies a traveling time required to travel between each visit point and specifies the combination where it is possible to travel between each visit point within each allowable traveling time indicated by the acquired information.

11. The information processing apparatus according to any one of claims 1 to 10 **characterized in that**, wherein
the acquiring means further acquires information indicating a scheduled staying time for each visit point, and
the specifying means specifies the combination based on information indicating a standard staying time for each visit point stored in the storage means and the acquired information indicating the scheduled staying time.

12. The information processing apparatus according to claim 11 **characterized in that**, wherein
the specifying means specifies the combination including visit points where the standard staying time is longer than or equal to the scheduled staying time.

13. The information processing apparatus according to claim 11 **characterized in that**, wherein
the specifying means specifies the combination including visit points where the standard staying time is included in a predetermined time range from the scheduled staying time.

14. The information processing apparatus according to any one of claims 11 to 13 **characterized in that**, wherein
the specifying means specifies the combination by shortening or extending the scheduled staying time indicated by the acquired information.

15. The information processing apparatus according to claim 14 **characterized in that**, the information processing apparatus further comprises:
a generating means that generates information indicating how much the number of the combinations is changed by shortening or extending the scheduled staying time on the basis of the combinations specified by the specifying means by shortening or extending the scheduled staying time and the combinations specified by the specifying means without shortening or extending the scheduled staying time.

16. The information processing apparatus according to any one of claims 1 to 15 **characterized in that**, wherein
the acquiring means further acquires information indicating a visiting order of each visit point, and
the specifying means specifies a traveling time required to travel between each visit point and specifies the combination where each visit point can be visited in the visiting order based on the specified traveling time and the acquired information indicating the visiting order.

17. The information processing apparatus according to claim 16 **characterized in that**, wherein
the specifying means specifies the combination where each visit point can be visited in a visiting order obtained by changing at least a part of the visiting order.

18. The information processing apparatus according to claim 17 **characterized in that**, the information processing apparatus further comprises:
a generating means that generates information indicating how much the number of the combinations is changed by changing the visiting order of visit points on the basis of the combinations specified by changing at least a part of the visiting order and the combinations specified without changing the visiting order.

19. The information processing apparatus according to any one of claims 1 to 18 **characterized in that**, wherein
the acquiring means further acquires information indicating a visit date and time of each visit point, and
the specifying means specifies the combination including visit points that can be reserved on the basis of information which is stored in the storage means and indicates reservation availability of each visit point and the acquired information indicating the visit date and time.

20. An information processing method performed by a computer, the method **characterized in that** the method comprises:
an acquisition step of acquiring information indicating a plurality of genres of visit points and a period of visiting; and
a specifying step of specifying, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

21. A recording medium in which an information processing program is computer-readably recorded, the information processing program **characterized in that** the information processing program causes a computer to function as:
an acquiring means that acquires information indicating a plurality of genres of visit points and a period of visiting; and
a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.

22. An information processing program **characterized in that** the information processing program causes a computer to function as:
an acquiring means that acquires information indicating a plurality of genres of visit points and a period of visiting; and
a specifying means that specifies, on the basis of the period indicated by the acquired information and position information of each visit point belonging to each genre, the position information being stored in a storage means that stores position information indicating at least a position of visit points belonging to a genre of visit points for each genre, a combination which is a combination of visit points, each of which is respectively selected from each genre indicated by the acquired information, and is a combination of visit points, which can be visited within the period of visiting.
